# EUROPEAN PATENT APPLICATION

(11) **EP 4 621 817 A1**
(43) Date of publication of application: **24.09.2025**
(21) Application number: 23891602.7
(22) Date of filing: 15.11.2023
(51) Int. Cl.: H01F 27/32, H01F 38/14, H01F 41/04, H02J 50/12

(54) **COIL COMPONENT, METHOD FOR MANUFACTURING SAME, POWER TRANSMISSION DEVICE, POWER RECEPTION DEVICE, AND POWER TRANSMISSION SYSTEM**

(30) Priority: 15.11.2022 JP 2022182693
(71) Applicant: Dai Nippon Printing Co., Ltd., Tokyo 162-8001 (JP)
(72) Inventor: ARAKAWA Akane, Tokyo 162-8001 (JP); OKABE Masato, Tokyo 162-8001 (JP)
(74) Representative: Müller-Boré & Partner Patentanwälte PartG mbB
(86) International application number: PCT/JP2023/041054
(87) International publication number: WO 2024/106455

(57) **Abstract**

[Solution] A coil component 10 according to an embodiment includes a first planar coil 11, a second planar coil 12 that is stacked with the first planar coil 11 at an interval, and a spacer member 20 that includes a third layer 23 that fills the interval. As for the coil component 10, a volume resistivity value of the third layer 23 with respect to an electric current that flows in a direction in which the first planar coil 11 and the second planar coil 12 overlap changes depending on a position of the third layer 23 on a rectangular coordinate system CS that is determined on a plane perpendicular to the direction in which the first planar coil 11 and the second planar coil 12 overlap.

## Description

### Technical Field

The present disclosure relates to a coil component, a method of manufacturing the coil component, a power transmitter, a power receiver, and a power transmission system.

### Background Art

Wireless power transmission systems that wirelessly transmit power are becoming widespread.

For example, a system that wirelessly transmits power by causing a high-frequency current to flow into a resonant circuit that includes a coil is known.

In the case where a high-frequency current flows into a coil, a skin effect can occur. The skin effect increases alternating-current resistance and accordingly causes transmission efficiency to be decreased during power transmission. In consideration of this, in the case where the coil is composed of Litz wire, the skin effect can be decreased, and accordingly, the transmission efficiency can be inhibited from decreasing. However, the Litz wire is composed of a large number of enameled wire lines that are twisted together, accordingly has high manufacturing costs, and needs time and effort for manufacture. The larger the size of the coil, the more the time and effort for manufacture.

A known technique uses a planar coil that has a spiral plate shape and that has a rectangular conductor wire section (see JP2020-47514A). For example, the planar coil can be formed from a plate material by punching. Accordingly, the planar coil can improve manufacturing efficiency regardless of the size of the coil. In addition, there is an advantage in the perspective of decreases in the thickness and weight of a device into which the coil is incorporated.

PTL 1 discloses a structure in which a magnetic material is provided so as to overlap a coil, and the magnetic material is provided between turn portions adjacent to each other in the coil. This structure enables a loss due to a proximity effect at turn portions to be inhibited from increasing.

### Summary of Invention

In the case where inductance is increased by using the planar coil described above, multiple planar coils may be stacked and connected to each other in series, and the total number of turns may be increased. The present inventor has found that coil performance can be improved by setting an interval between planar coils that face each other at a relatively small value such as 1 mm or less in the multilayer structure of the planar coils. A decrease in the interval described above is advantageous for a decrease in thickness. The present inventor also has found that in the case where the interval described above is filled with a magnetic material, the coil performance can be further improved.

However, a decrease in the interval described above makes dielectric breakdown or a short circuit likely to occur between the planar coils that face each other. In consideration of this, in the case where the interval described above is increased, a decrease in the thickness can be lessened, and the coil performance can decline.

It is an object of the present disclosure to provide a coil component, a method of manufacturing the coil component, a power transmitter, a power receiver, and a power transmission system that enable insulation between planar coils that face each other to be appropriately ensured while size is inhibited from increasing, and the performance is inhibited from declining in the case where the multiple planar coils are stacked.

An embodiment of the present disclosure relates to [1] to [21] described below.

[1] A coil component includes:
   a first planar coil;
   a second planar coil that is stacked with the first planar coil at an interval; and
   a spacer member that includes a layer that fills the interval.

A volume resistivity value of the layer with respect to an electric current that flows in a direction in which the first planar coil and the second planar coil overlap changes depending on a position of the layer on a rectangular coordinate system that is determined on a plane perpendicular to the direction in which the first planar coil and the second planar coil overlap.
[2] As for coil component described in [1], a thickness of the layer is non-uniform, and
   a distance between the first planar coil and the second planar coil is non-uniform.
[3] A coil component includes:
   a first planar coil;
   a second planar coil that is stacked with the first planar coil at an interval; and
   a spacer member that includes a layer that fills the interval.
   A thickness of the layer is non-uniform, and
   a distance between the first planar coil and the second planar coil is non-uniform.
[4] As for the coil component described in [2] or [3], the first planar coil includes three or more turn portions that are arranged in a radial direction,
   the second planar coil includes three or more turn portions that are arranged in a radial direction,
   an n-th (n is an integer that ranges from 1 to a number of turns of the first planar coil that is 3 or more) turn portion counted from a center of the first planar coil partly faces an n-th (n is an integer that ranges from 1 to a number of turns of the second planar coil that is 3 or more) turn portion counted from a center of the second planar coil, and
   a thickness of a portion of the layer that is located between a third or more turn portion counted from the center of the first planar coil and a corresponding turn portion of the second planar coil that faces the third or more turn portion is partly or entirely more than a thickness of a portion that is located between a second or less turn portion counted from the center of the first planar coil and a corresponding turn portion of the second planar coil that faces the second or less turn portion.
[5] As for the coil component described in any one of [2] to [4], the second planar coil curves such that a distance from an outer circumferential edge of the second planar coil to the first planar coil in the direction in which the first planar coil and the second planar coil overlap is longer than a distance from an inner circumferential edge of the second planar coil to the first planar coil in the direction in which the first planar coil and the second planar coil overlap.
[6] As for the coil component described in any one of [1] to [5], an inner end portion of the first planar coil in the radial direction and an inner end portion of the second planar coil in the radial direction are electrically connected to each other.
[7] As for the coil component described in [2] or [3], the first planar coil includes three or more turn portions that are arranged in a radial direction,
   the second planar coil includes three or more turn portions that are arranged in a radial direction,
   an n-th (n is an integer that ranges from 1 to a number of turns of the first planar coil that is 3 or more) turn portion counted from a center of the first planar coil partly faces an n-th (n is an integer that ranges from 1 to a number of turns of the second planar coil that is 3 or more) turn portion counted from a center of the second planar coil, and
   a thickness of a portion of the layer that is located between a third or more turn portion counted from an outermost turn portion of the first planar coil and a corresponding turn portion of the second planar coil that faces the third or more turn portion is partly or entirely more than a thickness of a portion that is located between a second or less turn portion counted from the outermost turn portion of the first planar coil and a corresponding turn portion of the second planar coil that faces the second or less turn portion.
[8] As for the coil component described in [2] or [3], the second planar coil curves such that a distance from an inner circumferential edge of the second planar coil to the first planar coil in the direction in which the first planar coil and the second planar coil overlap is longer than a distance from an outer circumferential edge of the second planar coil to the first planar coil in the direction in which the first planar coil and the second planar coil overlap.
[9] As for the coil component described in any one of [1] to [3], [7], or [8], an outer end portion of the first planar coil in the radial direction and an outer end portion of the second planar coil in the radial direction are electrically connected to each other.
[10] As for the coil component described in any one of [1] to [9], the second planar coil includes multiple turn portions that are arranged in a radial direction, and
   at least one turn portion among the multiple turn portions curves so as to leave from the first planar coil.
[11] As for the coil component described in [10], the at least one turn portion has a through-hole, and at least a circumferential portion of the through-hole of the at least one turn portion curves so as to leave from the first planar coil.
[12] As for the coil component described in any one of [1] to [11], the spacer member entirely exerts magnetism.
[13] As for the coil component described in [12], the spacer member contains a holding material that contains resin and a magnetic material particle that is held by the holding material.
[14] As for the coil component described in [1], the layer includes a magnetic-material-containing portion that contains a magnetic material and a non-magnetic portion that does not contain a magnetic material, and
   the volume resistivity value of the magnetic-material-containing portion is smaller than the volume resistivity value of the non-magnetic portion.
[15] As for the coil component described in [14], the non-magnetic portion is composed of nylon, polypropylene, or epoxy.
[16] As for the coil component described in [14] or [15], the first planar coil includes three or more turn portions that are arranged in a radial direction,
   the second planar coil includes three or more turn portions that are arranged in a radial direction,
   an n-th (n is an integer that ranges from 1 to a number of turns of the first planar coil that is 3 or more) turn portion counted from a center of the first planar coil partly faces an n-th (n is an integer that ranges from 1 to a number of turns of the second planar coil that is 3 or more) turn portion counted from a center of the second planar coil, and
   a portion of the layer that is located between a third or more turn portion counted from the center of the first planar coil and a corresponding turn portion of the second planar coil that faces the third or more turn portion is partly or entirely formed by the non-magnetic portion.
[17] As for the coil component described in any one of [2], [3], [5], [6], and [10] to [13], the distance in the direction in which the first planar coil and the second planar coil overlap gradually increases in a direction from an inner circumference toward an outer circumference.
[18] A method of manufacturing a coil component includes:
   a step of preparing a mold that has an installation surface that includes portions that have different heights;
   a step of installing a second planar coil on the mold such that a portion of the second planar coil faces the portions of the installation surface that have the different heights;
   a step of pressing a first mold material against the installation surface with the second planar coil interposed therebetween and forming the first mold material that is cured and the second planar coil into a single body;
   a step of removing the first mold material and the second planar coil from the mold;
   a step of disposing the first planar coil at an interval from a surface of the second planar coil opposite a surface that is joined to the first mold material such that the first planar coil overlaps the opposite surface; and
   a step of filling a second mold material between the first planar coil and the second planar coil.
[19] A power transmitter includes: the coil component described in any one of [1] to [17].
[20] A power receiver includes: the coil component described in any one of [1] to [17].
[21] A power transmission system includes: a power transmitter; and a power receiver.

At least the power transmitter or the power receiver includes the coil component described in any one of [1] to [17].

According to the present disclosure, insulation between planar coils that face each other can be appropriately ensured while size is inhibited from increasing, and the performance is inhibited from declining in the case where the multiple planar coils are stacked.

### Brief Description of Drawings

[Fig. 1] Fig. 1 schematically illustrates a wireless power transmission system for which a coil component according to a first embodiment is used.
[Fig. 2] Fig. 2 is a plan view of the coil component according to the first embodiment.
[Fig. 3] Fig. 3 is an exploded perspective view of the coil component illustrated in Fig. 2.
[Fig. 4] Fig. 4 is a sectional view of the coil component illustrated in Fig. 2.
[Fig. 5] Fig. 5 is a plan view of the coil component illustrated in Fig. 2 and illustrates portions that have different thicknesses in the coil component.
[Fig. 6] Fig. 6 illustrates an example of the distribution of electric field strength when an electric current flows into the coil component illustrated in Fig. 2.
[Fig. 7] Fig. 7 illustrates an example of a method of manufacturing the coil component illustrated in Fig. 2.
[Fig. 8] Fig. 8 illustrates the example of the method of manufacturing the coil component illustrated in Fig. 2.
[Fig. 9] Fig. 9 illustrates the example of the method of manufacturing the coil component illustrated in Fig. 2.
[Fig. 10] Fig. 10 illustrates the example of the method of manufacturing the coil component illustrated in Fig. 2.
[Fig. 11] Fig. 11 illustrates the example of the method of manufacturing the coil component illustrated in Fig. 2.
[Fig. 12] Fig. 12 illustrates the example of the method of manufacturing the coil component illustrated in Fig. 2.
[Fig. 13] Fig. 13 illustrates the example of the method of manufacturing the coil component illustrated in Fig. 2.
[Fig. 14] Fig. 14 is a sectional view of a coil component according to a second embodiment.
[Fig. 15] Fig. 15 is a sectional view of a coil component according to a third embodiment.
[Fig. 16] Figs. 16 illustrate an example of a method of manufacturing the coil component illustrated in Fig. 15.
[Fig. 17] Fig. 17 is a sectional view of a coil component according to a fourth embodiment.
[Fig. 18] Figs. 18 illustrate an example of a method of manufacturing the coil component illustrated in Fig. 17.
[Fig. 19] Fig. 19 is a sectional view of a coil component according to a fifth embodiment.
[Fig. 20] Fig. 20 is a sectional view of a coil component according to a sixth embodiment.
[Fig. 21] Fig. 21 illustrates a graph for describing electric field strength when predetermined dimensions are set to the coil component illustrated in Fig. 20 and the electric field strength of coil components in comparative examples.
[Fig. 22] Fig. 22 is a perspective view of the coil component illustrated in Fig. 20 where predetermined dimensions that differ from those in the case of Fig. 21 and that are set to the coil component are illustrated in the figure.
[Fig. 23] Fig. 23 illustrates a graph for describing the electric field strength of the coil component in a dimensional condition illustrated in Fig. 22.
[Fig. 24] Fig. 24 is a perspective view of the coil component illustrated in Fig. 20 where predetermined dimensions that differ from those in the cases of Fig. 21 and Fig. 22 and that are set to the coil component are illustrated in the figure.
[Fig. 25] Fig. 25 illustrates a graph for describing the electric field strength of the coil component in a dimensional condition illustrated in Fig. 24.

### Description of Embodiments

Embodiments will hereinafter be described with reference to the drawings.

In the present specification, words such as a "sheet", a "film", and a "plate" are not distinguished from each other only based on different names. Accordingly, for example, the "sheet" has a concept that includes a member that can be referred to as a film or a plate.

### <<First Embodiment>>

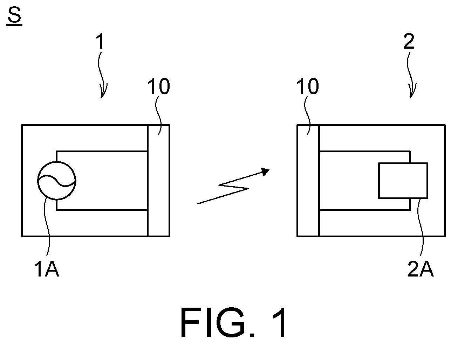

Fig. 1 schematically illustrates a wireless power transmission system S for which coil components 10 according to a first embodiment are used. The wireless power transmission system S (abbreviated below as the power transmission system S) will now be described with reference to Fig. 1. It goes without saying that a coil component according to another embodiment that differs from the first embodiment may be used for the power transmission system S.

### <Wireless Power Transmission System>

The power transmission system S includes a power transmitter 1 and a power receiver 2. The power transmitter 1 includes a coil component 10 and a high-frequency current applying unit 1A. The coil component 10 of the power transmitter 1 functions as a power transmission coil. The high-frequency current applying unit 1A applies a high-frequency current to the coil component 10 that functions as the power transmission coil.

The power receiver 2 includes a coil component 10 and a converter 2A. The coil component 10 of the power receiver 2 functions as a power reception coil. The converter 2A modulates a high-frequency current that is generated at the coil component 10. For example, the converter 2A includes a rectifier circuit that converts the high-frequency current into a direct current. For example, the converter 2A may be configured to include a full-wave rectifier circuit that includes multiple diodes and a smoothing capacitor.

According to the present embodiment, the power transmitter 1 and the power receiver 2 include the respective coil components 10. However, the power transmitter 1 or the power receiver 2 may include the coil component 10, and another coil component may be used for the other.

When power is wirelessly (non-contact) transmitted from the power transmitter 1 to the power receiver 2, the power transmitter 1 applies a high-frequency current at a predetermined frequency from the high-frequency current applying unit 1A to the coil component 10 that functions as the power transmission coil. At this time, a magnetic field is generated at the coil component 10 due to electromagnetic induction. As for the power receiver 2, a high-frequency current is generated at the coil component 10 that functions as the power reception coil due to the influence of the magnetic field. That is, the power receiver 2 receives the magnetic field from the power transmitter 1 or is affected by the magnetic field at the power transmitter 1 and causes the high-frequency current to flow due to the electromagnetic induction. The converter 2A converts the high-frequency current into a direct current and applies the converted direct current to, for example, a battery not illustrated.

A power transmission method that is used for the power transmission system S illustrated in Fig. 1 is a magnetic resonance method. However, the coil component 10 according to the present embodiment may be used for a power transmission system in an electromagnetic induction method. The power transmission system S is configured to transmit power wirelessly to an electric vehicle. In this case, the power transmitter 1 is installed on a road or parking. The power receiver 2 is installed on the electric vehicle.

However, the use of the power transmission system S is not limited to power transmission to the electric vehicle. For example, the power transmission system S may be used for power transmission to a flying object such as a drone or a robot. The power transmission system S may be used for power transmission to a submersible in a sea or an exploration robot. The use of the coil component 10 is not limited to a wireless power transmission system. For example, the coil component 10 may be used for a transformer, a DC-DC converter, or an antenna.

### <Coil Component>

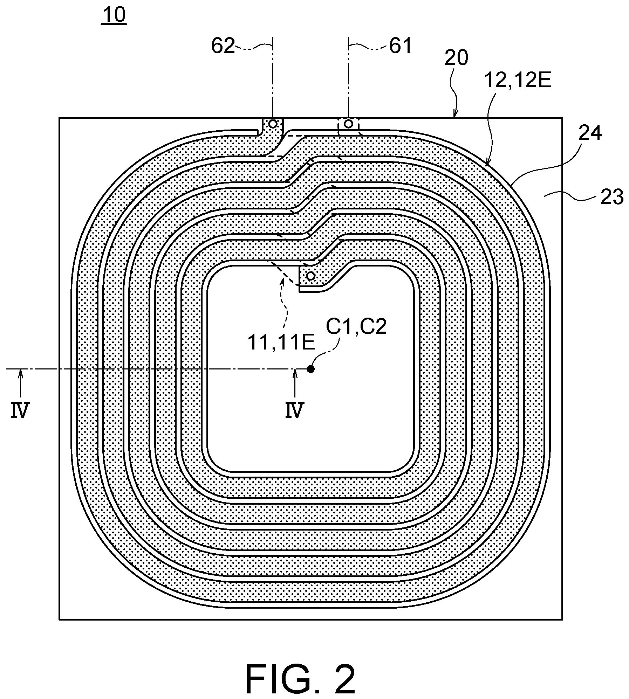

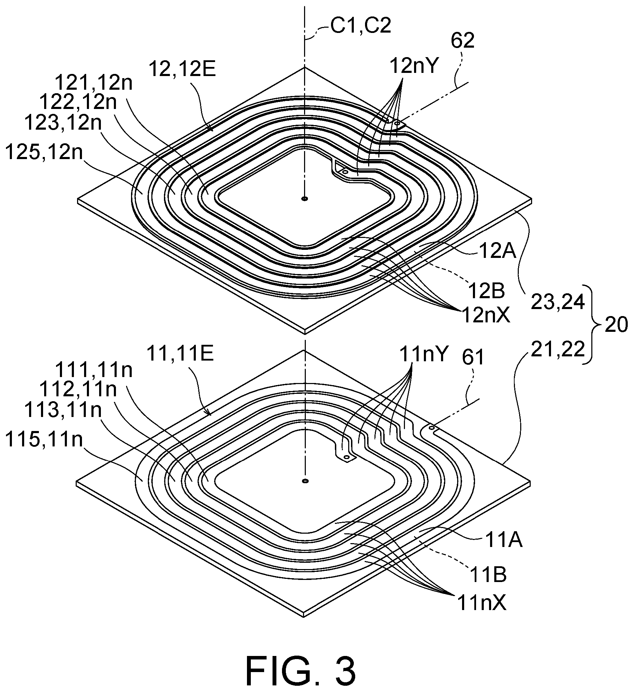

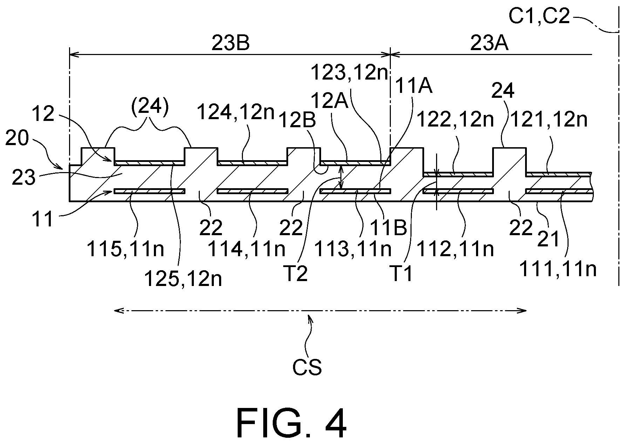

Each coil component 10 will now be described. Fig. 2 is a plan view of the coil component 10. Fig. 3 is an exploded perspective view of the coil component 10. Fig. 4 is a sectional view of the coil component 10. Fig. 4 is a sectional view corresponding to a line IV-IV in Fig. 2.

As illustrated in Fig. 2 to Fig. 4, the coil component 10 includes a first planar coil 11, a second planar coil 12, a spacer member 20, a first connection terminal 61, and a second connection terminal 62. In Fig. 2, the second planar coil 12 is illustrated by using dots for convenience of description.

As illustrated in Fig. 4, the first planar coil 11 and the second planar coil 12 are stacked at an interval. The spacer member 20 functions such that the interval between the first planar coil 11 and the second planar coil 12 is maintained. The spacer member 20 also has a function of forming the first planar coil 11 and the second planar coil 12 into a single body.

As illustrated in Fig. 3 and Fig. 4, the spacer member 20 fills the interval between the first planar coil 11 and the second planar coil 12 and covers a surface (a second surface 11B) of the first planar coil 11 opposite a surface (a first surface 11A) that faces the second planar coil 12. In Fig. 3, for convenience of description, a portion (a layer) of the spacer member 20 that fills the interval between the first planar coil 11 and the second planar coil 12 and a portion (a layer) that covers the surface of the first planar coil 11 opposite the surface that faces the second planar coil 12 are illustrated so as to be separated from each other, but in practice, these portions have no joints and are formed into a single body as illustrated in Fig. 4. In Fig. 2 and Fig. 3, the first connection terminal 61 and the second connection terminal 62 are simply illustrated by using a two-dot chain line. Components of the coil component 10 will now be described in detail.

### (First Planar Coil and Second Planar Coil)

The first planar coil 11 has a spiral shape and is composed of a conductive material. According to the present embodiment, the first planar coil 11 contains copper. Specifically, the first planar coil 11 is composed of copper. However, the first planar coil 11 may be composed of, for example, a copper alloy, aluminum, or an aluminum alloy.

As illustrated in Fig. 3, the first planar coil 11 has a plate shape, and as illustrated in Fig. 4, a sectional shape of the first planar coil 11 in a direction perpendicular to a direction (in other words, a direction in which the spiral shape extends) in which the first planar coil 11 turns in the spiral shape is a rectangular shape.

A reference sign C1 illustrated in Fig. 2 and Fig. 3 represents the first central axis of the first planar coil 11 that passes through the center of the spiral shape of the first planar coil 11. In the case where the axial direction of the first planar coil 11 is mentioned below, the direction means a direction that extends along the first central axis C1 or a direction parallel with the first central axis C1. A direction perpendicular to the first central axis C1 is referred to as a radial direction of the first planar coil 11. The first planar coil 11 has the first surface 11A and the second surface 11B opposite each other in the axial direction. As for the first planar coil 11, the second planar coil 12 is stacked with the first surface 11A at an interval.

As illustrated in Fig. 3, the first planar coil 11 includes a conductor 11E that has a spiral shape formed by multiple turn portions 11n. The multiple turn portions 11n of the first planar coil 11 are arranged in the radial direction perpendicular to the first central axis C1 of the spiral shape. Specifically, the multiple turn portions 11n are connected so as to be increasingly far away from the first central axis C1 outward in the radial direction from the first central axis C1 of the spiral shape. Consequently, the spiral shape is formed.

The turn portions 11n are basically formed so as to turn 360 degrees around the first central axis C1 such that linear conductive portions do not form an annular shape. In the case of a so-called planar coil, both end portions of each turn portion 11n are shifted in the radial direction. As for the multiple turn portions 11n, an outer end portion in the radial direction of one of the turn portions 11n is connected to an inner end portion in the radial direction of another turn portion 11n, and the other turn portion 11n extends so as to be far away from the first central axis C1.

In some cases below, one nearest to the first central axis C1 among the multiple turn portions 11n is referred to as a turn portion 111. In some cases, a turn portion that is connected to the turn portion 111 is referred to as a turn portion 112. According to the present embodiment, the multiple turn portions 11n include five turn portions 111 to 115. In the following description for common matters among the multiple turn portions 11n, these are basically referred to as the turn portions 11n.

According to the present embodiment, the turn portions 11n turn so as to form a rectangular shape. However, the turn portions 11n may turn so as to form a circular shape. The spiral shape described in the present specification and the present disclosure means a shape of a planar curve that is helically wound. The planar curve described herein includes a planar pattern that repeatedly turns while curving as in a polyline as illustrated. In other words, the spiral shape is a shape that turns so as to gradually extend outward around the first central axis C1 of the first planar coil 11.

An inner end portion (an end portion near the first central axis C1) in the radial direction of the turn portion 111 nearest to the first central axis C1 is electrically connected to the second planar coil 12. An outer end portion (an end portion that is distal from the first central axis C1) in the radial direction of the turn portion 115 farthest from the first central axis C1 among the multiple turn portions 11n is connected to the first connection terminal 61.

The phrase "inner in the radial direction of the first planar coil 11 (the turn portions 11n)" described herein means a radial direction toward the first central axis C1. The phrase "outer in the radial direction of the first planar coil 11 (the turn portions 11n)" described herein means a radial direction away from the first central axis C1. According to the present embodiment, the first central axis C1 is determined as follows. Linear imaginary turn portions each of which has a shape similar to that of the innermost turn portion 111 are sequentially drawn from the inner end portion in the radial direction of the innermost turn portion 111 so as to form a spiral shape inward in the radial direction. Drawing continues until an imaginary turn portion can be drawn within a diameter of 1 cm. A line that passes through an inner region in the radial direction of the imaginary turn portion that is drawn within a diameter of 1 cm in a direction perpendicular to the radial direction and to the circumferential direction of the spiral shape is determined as the first central axis C1.

For example, the first planar coil 11 according to the present embodiment is formed into the spiral shape by being punched from a copper plate. However, the first planar coil 11 can be formed by etching copper foil into the spiral shape.

For example, the thickness (the thickness of the conductor 11E) of the first planar coil 11 may be 0.1 mm or more and 1.0 mm or less. The radius (a distance to a portion farthest from the first central axis C1 in the radial direction) of the first planar coil 11 may be 80 mm or more or may be 80 mm or more and 450 mm or less. The aspect ratio of the first planar coil 11 (the conductor 11E) a sectional shape of which is a rectangular shape is determined by dividing the radial width (the width in the radial direction) of the first planar coil 11 (the conductor 11E) by the thickness of the first planar coil 11 (the conductor 11E). The aspect ratio of the first planar coil 11 (the conductor 11E) may be 40 or less, may be 2 or more and 12 or less, or may be 3 or more and 10 or less.

In the case where power is transmitted to the electric vehicle by using the magnetic resonance method, a power of 1 Kw or more, preferably, 5 Kw or more can be preferably transmissive in the frequency band of the high-frequency current at 10 KHz to 200 KHz, particularly, at 75 KHz or more and 100 KHz or less, or at 79 KHz to 90 KHz. In this case, the thickness of the first planar coil 11 composed of copper is preferably 0.2 mm or more. In this perspective, the lower limit of the thickness of the first planar coil 11 may be set at 0.2 mm. In the case where power is transmitted to the electric vehicle, an excessive size is not preferable, and restriction on size is imposed in some cases. In this perspective, the first planar coil 11 and the second planar coil 12 described later, specifically, the conductor 11E of the first planar coil 11 and a conductor 12E of the second planar coil 12 are preferably formed so as to be within a squire a side of which is 800 mm in size.

The line width (the line width of the conductor 11E) of the first planar coil 11, that is, the radial width (the width in the radial direction) of each turn portion 11n is not particularly limited. In consideration that a power of 1 Kw or more, preferably, 5 Kw or more is made transmissive in the frequency band of the high-frequency current at, for example, 79 KHz to 90 KHz, the radial width of each turn portion 11n may be 2 mm or more and 20 mm or less, or may be 2 mm or more and 16 mm or less, 2 mm or more and 12 mm or less, or 2 mm or more and 8 mm or less. The number of turns of the first planar coil 11 may be 4 or more and 12 or less but is not particularly limited.

Also, the second planar coil 12 has a spiral shape, and the second planar coil 12 contains copper according to the present embodiment. Specifically, the second planar coil 12 is composed of copper. The material of the second planar coil 12 is not particularly limited, but examples may include a copper alloy, aluminum, and an aluminum alloy. Also, the second planar coil 12 has a plate shape, and as illustrated in Fig. 4, a sectional shape of the second planar coil 12 in a direction perpendicular to a direction in which the second planar coil 12 turns in the spiral shape is a rectangular shape.

A reference sign C2 illustrated in Fig. 2 and Fig. 3 represents the second central axis of the second planar coil 12 that passes through the center of the spiral shape of the second planar coil 12. In the case where the axial direction of the second planar coil 12 is mentioned below, the direction means a direction that extends along the second central axis C2 or a direction parallel with the second central axis C2. A direction perpendicular to the second central axis C2 is referred to as a radial direction of the second planar coil 12. The second planar coil 12 has a first surface 12A and a second surface 12B opposite each other in the axial direction. As for the second planar coil 12, the first surface 12A is exposed from the spacer member 20, and the second surface 12B faces the first planar coil 11 (the first surface 11A).

According to the present embodiment, the second planar coil 12 is disposed coaxially with the first planar coil 11. That is, the first central axis C1 of the first planar coil 11 and the second central axis C2 of the second planar coil 12 match each other, in other words, are along the same line. However, the first planar coil 11 and the second planar coil 12 may overlap such that the first central axis C1 of the first planar coil 11 and the second central axis C2 of the second planar coil 12 are parallel with each other. That is, the first planar coil 11 and the second planar coil 12 may not be coaxial with each other.

The second planar coil 12 includes the conductor 12E that has a spiral shape formed by multiple turn portions 12n. The multiple turn portions 12n of the second planar coil 12 are arranged in the direction perpendicular to the second central axis C2 of the spiral shape.

The names (such as a turn portion 121) depending on positions and the connection form of the multiple turn portions 12n are similar to those of the turn portions 11n of the first planar coil 11. According to the present embodiment, the number of turns of the first planar coil 11 and the number of turns of the second planar coil 12 are equal to each other, and the multiple turn portions 12n include five turn portions 121 to 125. The turn portions 12n turn so as to form a rectangular shape as in the turn portions 11n. The turn portions 12n may turn so as to form a circular shape. The number of turns of the first planar coil 11 and the number of turns of the second planar coil 12 may differ from each other. For example, the turn portions 12n may have a rectangular shape, and the turn portions 11n may have a circular shape.

The inner end portion in the radial direction of the turn portion 111 nearest to the first central axis C1 is electrically connected to the second planar coil 12 as described above. Specifically, the inner end portion in the radial direction of the turn portion 111 is connected to an inner end portion of the turn portion 121 of the second planar coil 12. With the first planar coil 11 and the second planar coil 12 connected to each other, a direction in which the first planar coil 11 turns from an end portion (the outer end portion in the radial direction of the turn portion 115) that is not connected to the second planar coil 12 to an end portion that is connected to the second planar coil 12 is the same as a direction in which the second planar coil 12 turns from an end portion that is connected to the first planar coil 11 to an end portion (an outer end portion in the radial direction of the turn portion 125) that is not connected to the first planar coil 11.

The outer end portion in the radial direction of the turn portion 125 farthest from the second central axis C2 among the multiple turn portions 12n is connected to the second connection terminal 62. Directions that are represented by the phrase "inner and outer in the radial direction of the second planar coil 12 (the turn portions 12n)" are determined as in the case of the phrase "inner and outer in the radial direction of the first planar coil 11" described above. A method of determining the position of the second central axis C2 is determined in the same manner as in the case of the first central axis C1. For example, the second planar coil 12 according to the present embodiment is formed into the spiral shape by being punched from a copper plate. However, the second planar coil 12 can be formed by etching copper foil into the spiral shape.

According to the present embodiment, as illustrated in Fig. 4, an n-th (n is an integer that ranges from 1 to the number of turns of the first planar coil 11) turn portion 11n counted from the center of the first planar coil 11 partly faces an n-th (n is an integer that ranges from 1 to the number of turns of the second planar coil 12) turn portion 12n counted from the center of the second planar coil 12 with the first planar coil 11 and the second planar coil 12 overlapping. The n-th turn portion 11n counted from the center of the first planar coil 11 does not face turn portions 12n (such as n-1 and n+1) other than the n-th turn portion 12n counted from the center of the second planar coil 12. A range in which the n-th turn portion 11n counted from the center of the first planar coil 11 and the n-th turn portion 12n counted from the center of the second planar coil 12 face each other may be 1/2 or more of the entire length of each of the turn portions 11n and the turn portions 12n or may be 3/4 or more of the entire length. According to the knowledge of the present inventor, the range in which each turn portion 11n and the corresponding turn portion 12n face each other is preferably increased from the perspective that good coil performance is ensured.

According to the present embodiment, portions of each turn portion 11n and the corresponding turn portion 12n that face each other do not protrude from each other when viewed in a direction (the axial direction) in which these overlap. According to the knowledge of the present inventor, the portions of each turn portion 11n and the corresponding turn portion 12n that face each other preferably do not protrude from each other when viewed in the direction (the axial direction) in which these overlap from the perspective that good coil performance is ensured. According to the present embodiment, the line width of each turn portion 11n and the line width of each turn portion 12n are equal to each other, and the portions of each turn portion 11n and the turn portion 12n that face each other do not protrude from each other when viewed in the direction (the axial direction) in which these overlap. That is, when one of the portions of each turn portion 11n and the turn portion 12n that face each other is projected on the other in the axial direction, an image of the projected one matches that of the other.

Referring to Fig. 3, according to the present embodiment, each of the turn portions 11n and the turn portions 12n includes main portions 11nX and 12nX that extend along four sides of a square and that partly open, and transition portions 11nY and 12nY that extend inward in the radial direction from first end portions of the main portions 11nX and 12nX. As for the turn portions 11n and the turn portions 12n that face each other, the main portions 11nX and the main portions 12nX entirely face each other. Consequently, the range in which each turn portion 11n and the corresponding turn portion 12n face each other is 90% or more of the entire length of each of the turn portions 11n and the turn portions 12n.

According to the present embodiment, for example, the thickness (the thickness of the conductor 12E) of the second planar coil 12 may be 0.1 mm or more and 1.0 mm or less. The radius (a distance to a portion farthest from the second central axis C2 in the radial direction) of the second planar coil 12 may be 80 mm or more or may be 80 mm or more and 450 mm or less as in the case of the first planar coil 11. The aspect ratio of the second planar coil 12 (the conductor 12E) a sectional shape of which is a rectangular shape may be 40 or less, may be 2 or more and 12 or less, or may be 3 or more and 10 or less as in the case of the first planar coil 11. The line width (the line width of the conductor 12E) of the second planar coil 12, that is, the radial width (the width in the radial direction) of each turn portion 12n may be 2 mm or more and 20 mm or less, or may be 2 mm or more and 16 mm or less, 2 mm or more and 12 mm or less, or 2 mm or more and 8 mm or less. The number of turns of the second planar coil 12 may be 4 or more and 12 or less but is not particularly limited.

The first planar coil 11 and the second planar coil 12 overlap at an interval. For example, the interval may be 0.5 mm or more and 2.5 mm or less or may be 0.5 mm or more and 1.5 mm or less.

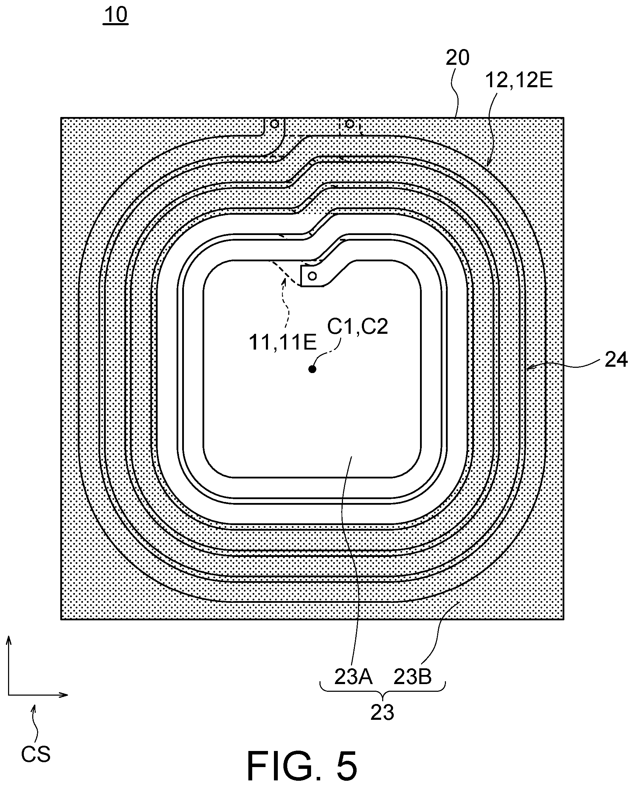

According to the present embodiment, as illustrated in Fig. 4, the dimensions of the interval between the first planar coil 11 and the second planar coil 12 are non-uniform. In other words, the thickness of a portion (a third layer 23 described later) of the spacer member 20 that fills the interval between the first planar coil 11 and the second planar coil 12 is non-uniform, and consequently, the distance between the first planar coil 11 and the second planar coil 12 is non-uniform. Consequently, according to the present embodiment, the volume resistivity value of the portion (the third layer 23) of the spacer member 20 that fills the interval described above with respect to the electric current that flows in the direction in which the first planar coil 11 and the second planar coil 12 overlap changes depending on the position of the portion described above (the third layer 23) on a rectangular coordinate system CS that is determined on the plane perpendicular to the direction in which the first planar coil 11 and the second planar coil 12 overlap. In Fig. 4 and Fig. 5, the rectangular coordinate system CS is illustrated, and directions in which the rectangular coordinate system CS is defined are illustrated.

In other words, the plane perpendicular to the direction in which the first planar coil 11 and the second planar coil 12 overlap described above means a plane perpendicular to or substantially perpendicular to the first central axis C1 and the second central axis C2. The plane perpendicular to the direction in which the first planar coil 11 and the second planar coil 12 overlap is parallel with the radial direction of the first planar coil 11 and the radial direction of the second planar coil 12.

In the case where "volume resistivity" is constant, the "volume resistivity value" increases in proportion to distance. According to the present embodiment, the spacer member 20 is composed of one kind of material, and accordingly, the volume resistivity of the whole of the spacer member 20 is constant. Accordingly, the volume resistivity value with respect to the electric current that flows in the thickness direction of the spacer member 20, in other words, the volume resistivity value with respect to the electric current that flows in the direction in which the first planar coil 11 and the second planar coil 12 overlap increases as the thickness of the portion of the spacer member 20 that fills the interval between the first planar coil 11 and the second planar coil 12 increases. According to the present embodiment, an outer circumference part of the portion (the third layer 23) of the spacer member 20 that fills the interval between the first planar coil 11 and the second planar coil 12 is larger than an inner circumference part. Consequently, the volume resistivity value of the outer circumference part of the spacer member 20 is larger than that of the inner circumference part. The volume resistivity value at a position on the third layer 23 of the spacer member 20 with respect to the electric current that flows in the thickness direction is an electrical resistivity value that is measured in a manner in which the position described above is sandwiched between two electrodes in the thickness direction, and an electric current is caused to flow between the electrodes. During this measurement, surfaces of the two electrodes that are in contact with the spacer member 20 are set as 5 mm × 5 mm. According to the present embodiment, the first planar coil 11 is embedded in the spacer member 20, and the second planar coil 12 is formed into a single body together with the spacer member 20, and accordingly, when the system resistivity value is measured, the spacer member 20 is appropriately cut, the first planar coil 11 and the second planar 12 coil are removed from the spacer member 20, the two facing surfaces in the thickness direction of the third layer 23 are exposed, and the electrodes described above are subsequently brought into contact with the two facing surfaces. The spacer member 20 will now be described in detail.

### (Spacer Member)

The spacer member 20 fills the interval between the first planar coil 11 and the second planar coil 12 as described above and covers the second surface 11B of the first planar coil 11 opposite the first surface 11A that faces the second planar coil 12. Specifically, as illustrated in Fig. 4, the spacer member 20 includes a first layer 21 that covers the second surface 11B of the first planar coil 11, a second layer 22 that is stacked on the first layer 21 in a direction from the first layer 21 toward the second planar coil 12, the third layer 23, and a fourth layer 24. Among these, the third layer 23 is the portion that fills the interval between the first planar coil 11 and the second planar coil 12 and has a non-uniform thickness. In practice, the first layer 21, the second layer 22, the third layer 23, and the fourth layer 24 have no joints and are formed into a single body.

In the case where the first planar coil 11 and the second planar coil 12 are viewed in the axial direction, the first layer 21, the second layer 22, and the third layer 23 are sized so as to encompass the whole of the first planar coil 11 and the second planar coil 12. The first layer 21 is a sheet portion that covers the second surface 11B of the first planar coil 11. The first layer 21 is in contact with the second surface 11B of the first planar coil 11 and entirely covers the second surface 11B. The second layer 22 is a portion that overlaps the first layer 21 and that covers side surfaces of the first planar coil 11. In other words, the second layer 22 is a portion that covers the whole of the side surfaces of the first planar coil 11 inward and outward in the radial direction. The side surfaces of the first planar coil 11 are located between the first surface 11A and the second surface 11B.

The third layer 23 is a sheet portion that fills the interval between the first planar coil 11 and the second planar coil 12 as described above and is direct contact with the second planar coil 12. As illustrated in Fig. 4, the thickness of the third layer 23 is non-uniform although this will be described in detail later. The fourth layer 24 is a portion that protrudes from a portion of the third layer 23 at which the second planar coil 12 is not located, in other words, from a portion of the third layer 23 that is exposed from between the turn portions 12n of the second planar coil 12 adjacent to each other. As illustrated in Fig. 2 and Fig. 3, the fourth layer 24 extends into a spiral shape along the second planar coil 12 that has a spiral shape. The fourth layer 24 protrudes across the second planar coil 12. According to the present embodiment, as illustrated in Fig. 4, the position (the height position) of the top of the fourth layer 24 is constant over the region from the inner end portion to the outer end portion in the radial direction. However, the position of the top of the fourth layer 24 may be non-uniform.

The third layer 23 will now be described in detail. According to the present embodiment, the third layer 23 includes a first portion 23A and a second portion 23B that have different thicknesses. In Fig. 5, dots are illustrated in a range corresponding to the second portion 23B. The second portion 23B is located in the third layer 23 outside the first portion 23A. As illustrated in Fig. 4, the thickness T2 of the second portion 23B is more than the thickness T1 of the first portion 23A. For example, the thickness T1 may be 0.3 mm or more and 0.7 mm or less, may be 0.4 mm or more and 0.6 mm or less, or may be 0.5 mm. For example, the thickness T2 may be 2.5 times or more and 4 times or less of the thickness T1. For example, the thickness T2 may be 1 mm or more and 2.5 mm or less, may be 1.25 mm or more and 2 mm or less, may be 1.25 mm or more and 1.75 mm or less, or may be 1.5 mm.

The n-th turn portion 11n counted from the center of the first planar coil 11 partly faces the n-th turn portion 12n counted from the center of the second planar coil 12 as described above. According to the present embodiment, as illustrated in Fig. 4 and Fig. 5, a range containing a portion of the third layer 23 that is located between the portions of a third turn portion 113 counted from the center of the first planar coil 11 and a third turn portion 123 counted from the center of the second planar coil 12 that face each other and a portion outside the portion corresponds to the second portion 23B. That is, the second portion 23B that extends outward from the portions of the third turn portion 113 counted from the center of the first planar coil 11 and the third turn portion 123 counted from the center of the second planar coil 12 that face each other has a thickness more than that of the first portion 23A at the inner circumference.

That is, according to the present embodiment, the thicknesses (T2) of portions of the third layer 23 that are located between the third or more turn portions 113 to 115 counted from the center of the first planar coil 11 and the corresponding turn portions 123 to 125 of the second planar coil 12 that face the third or more turn portions 113 to 115 are partly or entirely (entirely in this example) more than the thicknesses (T1) of portions that are located between the second or less turn portions 111 and 112 counted from the center of the first planar coil 11 and the corresponding turn portions 121 and 122 of the second planar coil 12 that face the second or less turn portions 111 and 112.

As for the third layer 23 described above, according to the present embodiment, the thickness of the second portion 23B is more than the thickness of the first portion 23A, and the spacer member 20 is composed of one kind of material. For this reason, as for the third layer 23, the volume resistivity value of the second portion 23B with respect to the electric current that flows in the direction in which the first planar coil 11 and the second planar coil 12 overlap is more than the volume resistivity value of the first portion 23A that has the decreased thickness.

As for the third layer 23, the thickness T2 of the second portion 23B is more than the thickness T1 of the first portion 23A, and consequently, the distance between the outer circumference parts of the first planar coil 11 and the second planar coil 12 that face each other with the second portion 23B interposed therebetween is longer than the distance between the inner circumference parts of the first planar coil 11 and the second planar coil 12 that face each other with the first portion 23A interposed therebetween. According to the present embodiment, the surface of the third layer 23 that is in contact with the first planar coil 11 is flat, and the surface of the third layer 23 that is in contact with the second planar coil 12 has a step shape so as to correspond to the first portion 23A and the second portion 23B. The second planar coil 12 curves so as to leave from the first planar coil 11 and so as to correspond to the step shape described above. Specifically, the second planar coil 12 curves such that the distance from an outer circumferential edge of the second planar coil 12 to the first planar coil 11 in the direction in which the first planar coil 11 and the second planar coil 12 overlap (the axial direction) is longer than the distance from an inner circumferential edge of the second planar coil 12 to the first planar coil 11 in the direction in which the first planar coil 11 and the second planar coil 12 overlap.

In the case where an inner end portion of the first planar coil 11 in the radial direction and an inner end portion of the second planar coil 12 in the radial direction are electrically connected to each other as in the present embodiment, electric field strength (an electric potential difference) between the first planar coil 11 and the second planar coil 12 tends to increase as the distances in the radial direction from the inner end portions in the radial direction increase. In this case, dielectric breakdown or a short circuit is likely to occur at a position near the outer circumference between the first planar coil 11 and the second planar coil 12. According to the present embodiment, however, the thickness of the second portion 23B that is located at the outer circumference in the third layer 23 that fills the interval between the first planar coil 11 and the second planar coil 12 is more than that of the first portion 23A that is located at the inner circumference as described above, and consequently, the volume resistivity value of the second portion 23B is increased. In addition, the distance between the first planar coil 11 and the second planar coil 12 is increased at the outer circumference. Consequently, dielectric breakdown or a short circuit is inhibited from occurring more than the case where the volume resistivity value of the layer between the first planar coil 11 and the second planar coil 12 is constant or the distance between the first planar coil 11 and the second planar coil 12 is constant.

According to the present embodiment, the thickness of the second portion 23B that is located at the outer circumference in the third layer 23 is more than that of the first portion 23A that is located at the inner circumference, and the second portion 23B that has the increased thickness is a portion of the third layer 23. For this reason, size is inhibited from increasing due to an increase in the thickness of the third layer 23, and the coil performance is inhibited from declining.

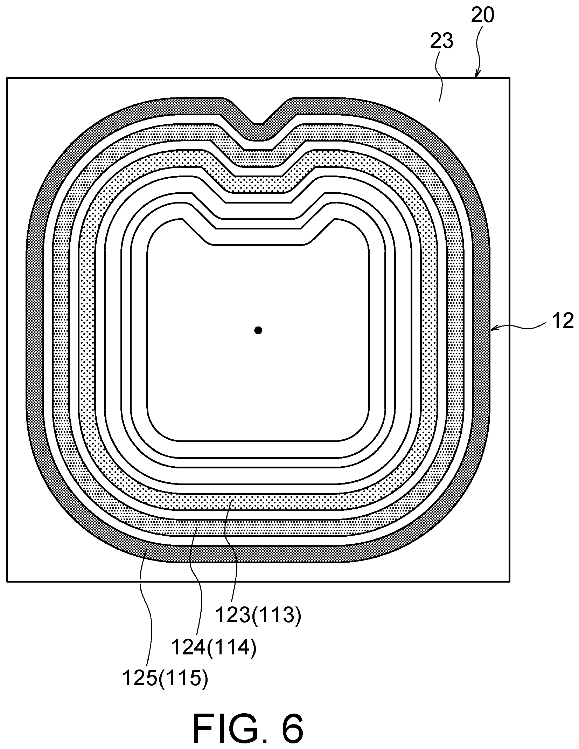

Fig. 6 illustrates an example of the distribution of electric field strength between the first planar coil 11 and the second planar coil 12 when an electric current flows into the coil component 10. In Fig. 6, the magnitude of the electric strength is illustrated by using the concentration of dots. What is illustrated in Fig. 6 is that as the concentration of the dots increases, the electric field strength increases. Portions illustrated without dots have no electric potential difference or have substantially no electric potential difference.

In Fig. 6, there is a tendency that the electric field strength gradually increases from between the third turn portion 113 counted from the center of the first planar coil 11 and the corresponding turn portion 123 of the second planar coil 12 that faces the third turn portion 113, and the electric field strength between the outermost turn portion 115 of the first planar coil 11 and the outermost turn portion 125 of the second planar coil 12 is the maximum. The case where the number of turns is 6 or more and the case where the number of turns is 3 or more and 4 or less have the same tendency that the electric field strength increases from between turn portions near the third turn portion counted from the center.

In consideration of the tendency described above, according to the present embodiment, shape that is used enables the thickness T2 of the second portion 23B in the third layer 23 that extends from the portion between the third turn portion 113 counted from the center of the first planar coil 11 and the third turn portion 123 counted from the center of the second planar coil 12 toward the outer circumference to be more than that of the first portion 23A inside the second portion 23B. However, the range of the second portion 23B, that is, the range of the third layer 23 in which the volume resistivity value or the thickness is partly increased is not particularly limited. The tendency of the distribution of electric field strength can change depending on changes in conditions such as a coil shape, the number of turns, and the magnitude of the electric current to be applied. For this reason, the range of the third layer 23 in which the volume resistivity value or the thickness is partly increased may be appropriately changed depending on the conditions such as the coil shape and the number of turns. For example, the third layer 23 may be formed such that the thickness gradually increases in a direction from the centers of the first planar coil 11 and the second planar coil 12 toward the outer circumference. In this case, the distance between the first planar coil 11 and the second planar coil 12 gradually increases in the direction from the centers of the first planar coil 11 and the second planar coil 12 toward the outer circumference.

According to the present embodiment, the spacer member 20 exerts magnetism as a whole, that is, the first layer 21, the second layer 22, the third layer 23, and the fourth layer 24 exert magnetism. As for the spacer member 20, an eddy current loss and leaking magnetic flux are decreased due to magnetism, a coupling coefficient is increased, and consequently, the coil performance is improved. The relative permeability of the spacer member 20 is preferably 2.0 or more and may be 2.0 or more and 10.0 or less. The relative permeability of the spacer member 20 is preferably 5.0 or more and may be 5.0 or more and 10.0 or less. The relative permeability of the spacer member 20 is not particularly limited, but when the relative permeability is too high, the flexibility and strength of the spacer member 20 are undesirably decreased in some cases. Accordingly, the relative permeability of the spacer member 20 may be 200 or less.

The spacer member 20 includes the fourth layer 24 that protrudes from the second planar coil 12 and can consequently effectively improve the coil performance. A height at which the fourth layer 24 protrudes from the second planar coil 12 is not particularly limited but may be, for example, 0.3 mm or more, may be 0.5 mm or more, or may be 1.0 mm or more. As the height of the fourth layer 24 increases, the eddy current loss tends to be further decreased, and the coupling coefficient tends to increase. As the fourth layer 24 becomes higher, the fourth layer 24 tends to be broken from the root. In view of this, for example, the height of the fourth layer 24 may be 10 mm or less. The fourth layer 24 may not be provided.

For example, the spacer member 20 according to the present embodiment contains multiple or innumerable magnetic material particles composed of a magnetic material and a holding material that contains resin. The magnetic material particles are held by the holding material. The holding material has insulation properties. The insulation properties mean that volume resistivity is 10¹⁰ Ω · m or more.

An example of the holding material that is contained in the spacer member 20 may be fiber reinforced plastic. More specifically, the holding material that is contained in the spacer member 20 may be glass fiber reinforced polyamide. However, the holding material is not particularly limited. For example, glass fibers may not be contained. Resin other than polyamide may be used.

The magnetic material particles may be composed of ferrite, particularly, ferrite of a soft magnetic material, a nanocrystal magnetic material, silicon steel, electromagnetic soft iron, or amorphous metal, or two or more kinds of these. The spacer member 20 may be composed of only an insulating material without a magnetic material. Also, in this case, when the thickness of the third layer 23 is non-uniform, the volume resistivity value can partly change in the third layer 23.

### (Connection Terminal)

As illustrated in Fig. 2 and Fig. 3, the first connection terminal 61 is connected to the outer end portion in the radial direction of the turn portion 115 of the first planar coil 11. The second connection terminal 62 is connected to the outer end portion in the radial direction of the turn portion 125 of the second planar coil 12. The first connection terminal 61 and the second connection terminal 62 can be used for, for example, connection to the high-frequency current applying unit 1A or the converter 2A. The first connection terminal 61 and the turn portion 115 may be connected to each other by ultrasonic joining, and the second connection terminal 62 and the turn portion 125 may be connected to each other by ultrasonic joining. However, a connection method is not limited but may be, for example, connection with a conductive adhesive.

### <Method of Manufacturing Coil Component 10>

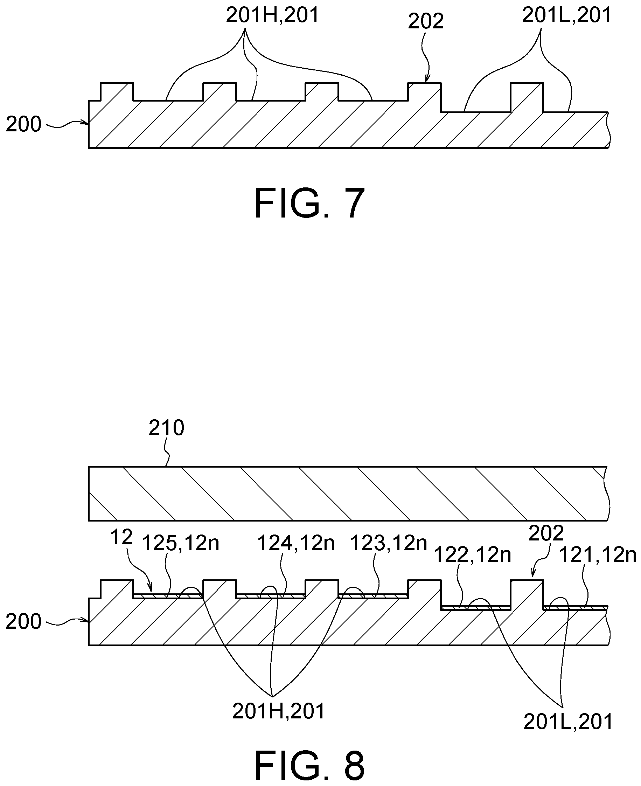

An example of a method of manufacturing the coil component 10 will be described. Fig. 7 schematically illustrates a mold 200 for manufacturing the coil component 10. When the coil component 10 is manufactured, the mold 200 is first prepared. The mold 200 has an installation surface 201 for the second planar coil 12. The installation surface 201 includes a lower portion 201L and a higher portion 201H that is higher than the lower portion 201L. The mold 200 has a protuberance 202 that is raised from the installation surface 201 and that extends into a spiral shape. The protuberance 202 extends into a spiral shape from a position radially inside the inner end portion in the radial direction of the second planar coil 12 to the outer end portion in the radial direction of the second planar coil 12 along the turn portions 12n.

Fig. 8 illustrates the second planar coil 12 that is installed on the installation surface 201. The second planar coil 12 is installed on the installation surface 201 so as not to be in contact with the protuberance 202. The second planar coil 12 is installed such that the second or less turn portions 121 and 122 counted from the center face the lower portion 201L of the installation surface 201, and the third or more turn portions 123 to 125 counted from the center face the higher portion 201H of the installation surface 201.

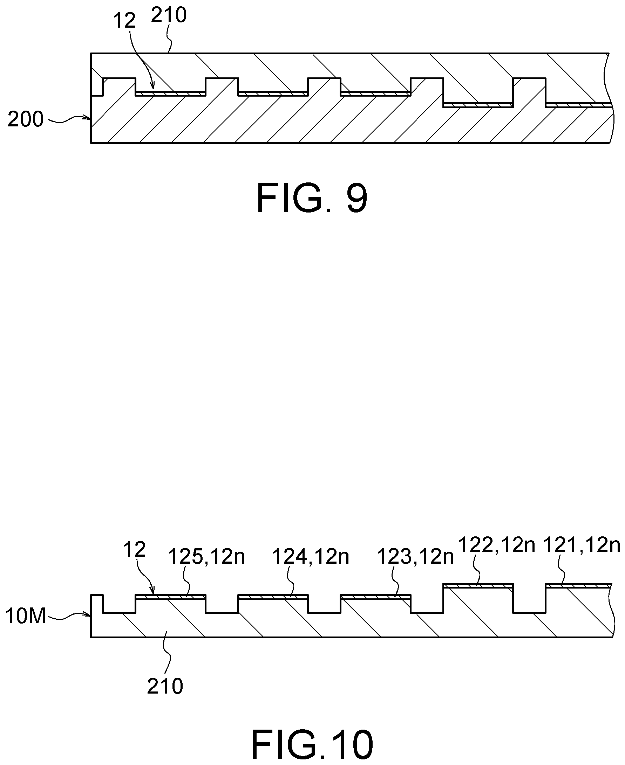

Subsequently, as illustrated in Fig. 8, the second planar coil 12 is covered by a first mold material 210. As illustrated in Fig. 9, the first mold material 210 is pressed against the installation surface 201 with the second planar coil 12 interposed therebetween. For example, the first mold material 210 may contain thermoplastic resin, and in this case, the first mold material 210 and the second planar coil 12 may be thermally pressed between the mold 200 and another mold not illustrated. The first mold material 210 may be filled between the mold 200 and another mold not illustrated by being injected.

After the first mold material 210 is pressed against the installation surface 201 with the second planar coil 12 interposed therebetween as described above, the first mold material 210 is cured. The first mold material 210 and the second planar coil 12 are formed into a single body, and as illustrated in Fig. 10, a coil intermediate material 10M that corresponds to the single body of the first mold material 210 and the second planar coil 12 is removed from the mold 200. The coil intermediate material 10M illustrated in Fig. 10 is reversed in the state illustrated in Fig. 9. As for the coil intermediate material 10M, the second or less turn portions 121 and 122 counted from the center of the second planar coil 12 are farther from the first mold material 210 than the third or more turn portions 123 to 125 counted from center.

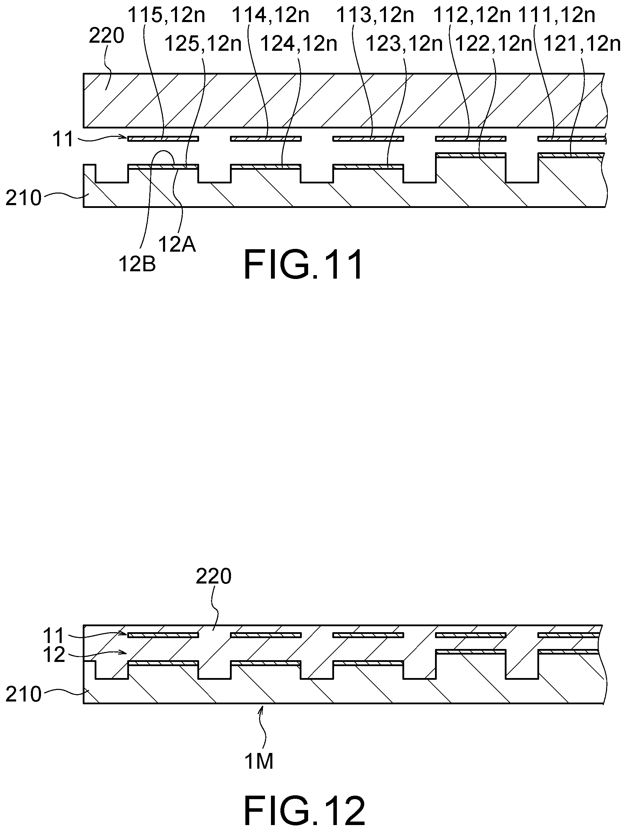

Subsequently, as illustrated in Fig. 11, the first planar coil 11 is disposed at an interval from the surface (the second surface 12B) of the second planar coil 12 opposite the surface (the first surface 12A) that is joined to the first mold material 210 such that the first planar coil 11 overlaps the opposite surface (the second surface 12B). The position of the first planar coil 11 may be maintained by using a spacer not illustrated. For example, such a spacer may be formed on the first mold material 210. The first planar coil 11 is covered by a second mold material 220. The second mold material 220 forms the spacer member 20. The material of the spacer that maintains the position of the first planar coil 11 on the second planar coil 12 described above may be the same as the second mold material 220, that is, the material of the spacer member 20. In this case, the spacer may be manufactured separately from the first mold material 210 and may be provided on the first mold material 210.

Subsequently, as illustrated in Fig. 12, the second mold material 220 is pressed against the coil intermediate material 10M. At this time, the second mold material 220 is filled between the first planar coil 11 and the second planar coil 12. The second mold material 220 contains multiple or innumerable magnetic material particles composed of a magnetic material and a holding material that contains resin. When the second mold material 220 is pressed against the coil intermediate material 10M, the second mold material 220 is liquefied or softened, flows when being pressed against the coil intermediate material 10M, and is filled between the first planar coil 11 and the second planar coil 12.

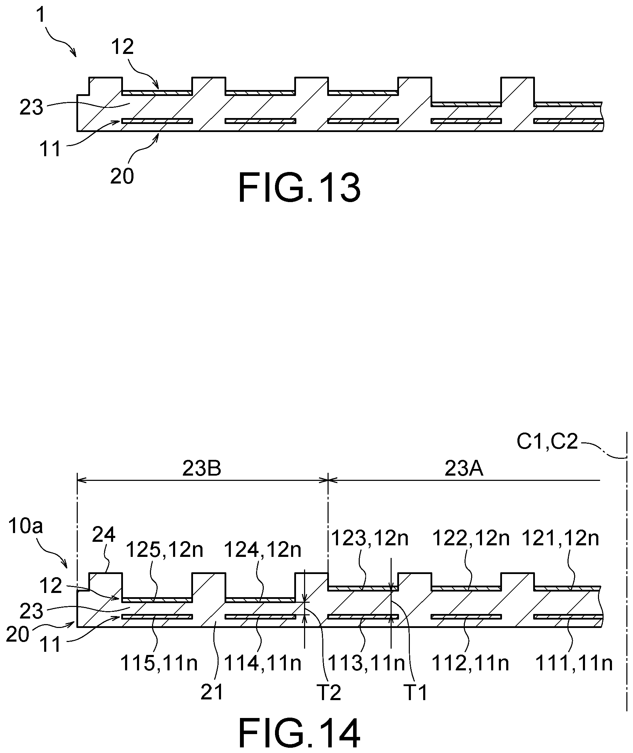

Subsequently, the second mold material 220 is cured. Consequently, the spacer member 20 is formed from the second mold material 220. As illustrated in Fig. 13, the first mold material 210 is removed, and consequently, the coil component 10 is obtained.

### <Use of Coil Component>

The coil component 10 according to the present embodiment can be used as the power transmission coil of the power transmitter 1 of the wireless power transmission system S described above and can be used as the power reception coil of the power receiver 2.

In the case where the coil component 10 is used as the power transmission coil, the first connection terminal 61 and the second connection terminal 62 are connected to the high-frequency current applying unit 1A illustrated in Fig. 1 or an alternating-current power source. After the high-frequency current is applied to the coil component 10, the electric current flows from the first connection terminal 61 to the first planar coil 11 and the second planar coil 12 and can subsequently flow from the second connection terminal 62 to the high-frequency current applying unit 1A or the alternating-current power source. The electric current flows from the second connection terminal 62 to the second planar coil 12 and the first planar coil 11 and can subsequently flow from the first connection terminal 61 to the high-frequency current applying unit 1A or the alternating-current power source. This enables a magnetic field that includes a line of magnetic force parallel with the central axis of each planar coil to be generated.

In the case where the coil component 10 is used as the power reception coil, the magnetic field that includes the line of magnetic force is received or is generated so as to pass inside the first planar coil 11 and the second planar coil 12, and consequently, the high-frequency current can be generated at the first planar coil 11 and the second planar coil 12. The high-frequency current can be applied from the first connection terminal 61 or the second connection terminal 62 to an external device.

The coil component 10 can be used for a transformer or an antenna. For example, in the case where the coil component 10 functions as a primary coil of the transformer, the first connection terminal 61 and the second connection terminal 62 are connected to the alternating-current power source. The supply of the high-frequency current enables magnetic flux to be applied from the center of each planar coil to an iron core.

The coil component 10 according to the present embodiment described above includes the first planar coil 11, the second planar coil 12 that is stacked with the first planar coil 11 at the interval, and the spacer member 20 that includes the third layer 23 that fills the interval. As for the coil component 10, the volume resistivity value of the third layer 23 with respect to the electric current that flows in the direction in which the first planar coil 11 and the second planar coil 12 overlap changes depending on the position of the third layer 23 on the rectangular coordinate system CS that is determined on the plane perpendicular to the direction in which the first planar coil 11 and the second planar coil 12 overlap.

As for the coil component 10, a portion (the second portion 23B in this example) of the third layer 23 that has a large volume resistivity value is located at a portion at which dielectric breakdown or a short circuit is likely to occur between the first planar coil 11 and the second planar coil 12, a portion (the first portion 23A in this example) of the third layer 23 that has a small volume resistivity value is located at a portion at which dielectric breakdown or a short circuit is unlikely to occur between the first planar coil 11 and the second planar coil 12, and consequently, dielectric breakdown or a short circuit, which can occur between the first planar coil 11 and the second planar coil 12, can be decreased.

According to the present embodiment, a method of forming the portion of the third layer 23 that has a large volume resistivity value is to partly increase the thickness of the third layer 23. In this case, the portion of the third layer 23 that has the increased thickness is a portion in the third layer 23, and accordingly, the size is inhibited from increasing due to the increase in the thickness of the third layer 23, and the coil performance is inhibited from declining. The method of forming the portion of the third layer 23 that has a large volume resistivity value may be to use a material that partly has high volume resistivity, but the thickness of the third layer 23 is not necessarily partly increased in this case.

Accordingly, the coil component 10 according to the present embodiment enables insulation between the planar coils 11 and 12 that face each other to be appropriately ensured while the size is inhibited from increasing, and the performance is inhibited from inclining in the case where the multiple planar coils 11 and 12 are stacked.

### <<Second Embodiment>>

A coil component 10a according to a second embodiment will now be described. Fig. 14 is a sectional view of a portion of the coil component 10a according to the second embodiment. Components according to the embodiment described later like or corresponding to those according to the first embodiment are designated by using like reference signs. In the case of the like components, the detailed description thereof is omitted.

According to the second embodiment, the third layer 23 of the spacer member 20 includes the first portion 23A and the second portion 23B that have different thicknesses, the thickness T1 of the first portion 23A that is located at the inner circumference is more than the thickness T2 of the second portion 23B that is located at the outer circumference. For example, the thickness T2 may be 0.3 mm or more and 0.7 mm or less, may be 0.4 mm or more and 0.6 mm or less, or may be 0.5 mm. For example, the thickness T1 may be 2.5 times or more and 4 times or less the thickness T2. For example, the thickness T1 may be 1 mm or more and 2.5 mm or less, may be 1.25 mm or more and 2 mm or less, may be 1.25 mm or more and 1.75 mm or less, or may be 1.5 mm.

According to the present embodiment, the number of turns of the first planar coil 11 and the number of turns of the second planar coil 12 are 5. According to the present embodiment, a range containing a portion of the third layer 23 that is located between portions of the third turn portion 113 counted from the outermost turn portion 115 of the first planar coil 11 and the third turn portion 123 counted from the outermost turn portion 125 of the second planar coil 12 that face each other and a portion that is located inside the portion corresponds to the first portion 23A. That is, the first portion 23A that extends from the portions of the third turn portion 113 counted from the outermost circumference of the first planar coil 11 and the third turn portion 123 counted from the outermost circumference of the second planar coil 12 that face each other to the centers of the planar coils 11 and 12 has a thickness more than that of the second portion 23B at the outer circumference thereof.

According to the present embodiment, the thicknesses of the portions of the third layer 23 that are located between the third or more turn portions 113 to 111 counted from the outermost turn portion 115 of the first planar coil 11 and the corresponding turn portions 123 to 121 of the second planar coil 12 that face the third or more turn portions 113 to 111 are partly or entirely (entirely in this example) more than the thicknesses of the portions that are located between the second or less turn portions 115 and 114 counted from the outermost turn portion 115 of the first planar coil 11 and the corresponding turn portions 125 and 124 of the second planar coil 12 that face the second or less turn portions 115 and 114.

Also according to the present embodiment, the spacer member 20 is composed of one kind of material. For this reason, as for the third layer 23, the volume resistivity value of the first portion 23A with respect to the electric current that flows in the direction in which the first planar coil 11 and the second planar coil 12 overlap is larger than the volume resistivity value of the second portion 23B that has the decreased thickness.

The thickness T1 of the first portion 23A is more than the thickness T2 of the second portion 23B in the third layer 23, and consequently, the distance between the inner circumference parts of the first planar coil 11 and the second planar coil 12 that face each other with the first portion 23A interposed therebetween is longer than the distance between the outer circumference parts of the first planar coil 11 and the second planar coil 12 that face each other with the second portion 23B interposed therebetween. According to the present embodiment, the surface of the third layer 23 that is in contact with the first planar coil 11 is flat, and the surface of the third layer 23 that is in contact with the second planar coil 12 has a step shape so as to correspond to the first portion 23A and the second portion 23B. Consequently, the second planar coil 12 curves so as to leave from the first planar coil 11 and so as to correspond to the step shape described above. Specifically, according to the present embodiment, the second planar coil 12 curves such that the distance from an inner circumferential edge of the second planar coil 12 to the first planar coil 11 in the direction in which the first planar coil 11 and the second planar coil 12 overlap is longer than the distance from an outer circumferential edge of the second planar coil 12 to the first planar coil 11 in the direction in which the first planar coil 11 and the second planar coil 12 overlap.

According to the present embodiment, the outer end portion of the first planar coil 11 in the radial direction and the outer end portion of the second planar coil 12 in the radial direction are electrically connected to each other. In this case, the electric field strength (the electric potential difference) between the first planar coil 11 and the second planar coil 12 tends to increase as the distances from the outer end portions in the radial direction to the centers of the planar coils 11 and 12 increase. In this case, dielectric breakdown or a short circuit is likely to occur at the inner circumference parts between the first planar coil 11 and the second planar coil 12. According to the present embodiment, however, the thickness of the first portion 23A that is located at the inner circumference in the third layer 23 that fills the interval between the first planar coil 11 and the second planar coil 12 is more than that of the second portion 23B that is located at the outer circumference, and consequently, the volume resistivity value of the first portion 23A is increased. In addition, the distance between the first planar coil 11 and the second planar coil 12 is increased at the inner circumference. Consequently, according to the present embodiment, dielectric breakdown or a short circuit is inhibited from occurring more than the case where the volume resistivity value of the layer between the first planar coil 11 and the second planar coil 12 is constant or the distance between the first planar coil 11 and the second planar coil 12 is constant.

### <<Third Embodiment>>

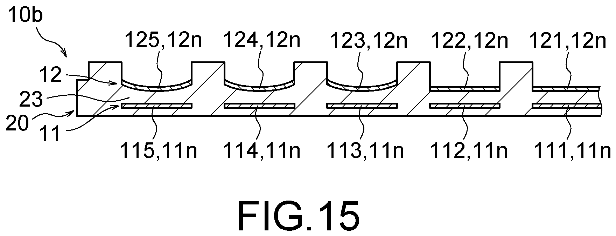

A coil component 10b according to a third embodiment will now be described. Fig. 15 is a sectional view of a portion of the coil component 10b according to the third embodiment. Components according to the embodiment described later like or corresponding to those according to the first and second embodiments are designated by using like reference signs. In the case of the like components, the detailed description thereof is omitted.

According to the third embodiment, as illustrated in Fig. 15, at least one of the turn portions 12n among the multiple turn portions 12n of the second planar coil 12 curves so as to leave from the first planar coil 11. Specifically, at least some turn portions 12n that are located at or near the outer circumference among the multiple turn portions 12n curve, and turn portions 12b that are located inside the turn portions 12n that curve do not curve. More specifically, also according to the present embodiment, the number of turns of the second planar coil 12 is 5. The third or more turn portions 123 to 125 counted from the center of the second planar coil 12 curve into an arc shape or a U-shape so as to leave from the first planar coil 11.

In the case where the turn portions 12n curve so as to leave from the first planar coil 11 as described above, the volume resistivity values of, for example, portions that are located between portions of the turn portions 12n that are farthest from the first planar coil 11 in the third layer 23 of the spacer member 20 and the first planar coil 11 are larger than the volume resistivity values of portions that are located between portions of the turn portions 12n that are nearest to the first planar coil 11 and the first planar coil 11. Needless to say, the distances between the portions of the turn portions 12n that are farthest from the first planar coil 11 and the first planar coil 11 are longer than the distances between the portions of the turn portions 12n that are nearest to the first planar coil 11 and the first planar coil 11.

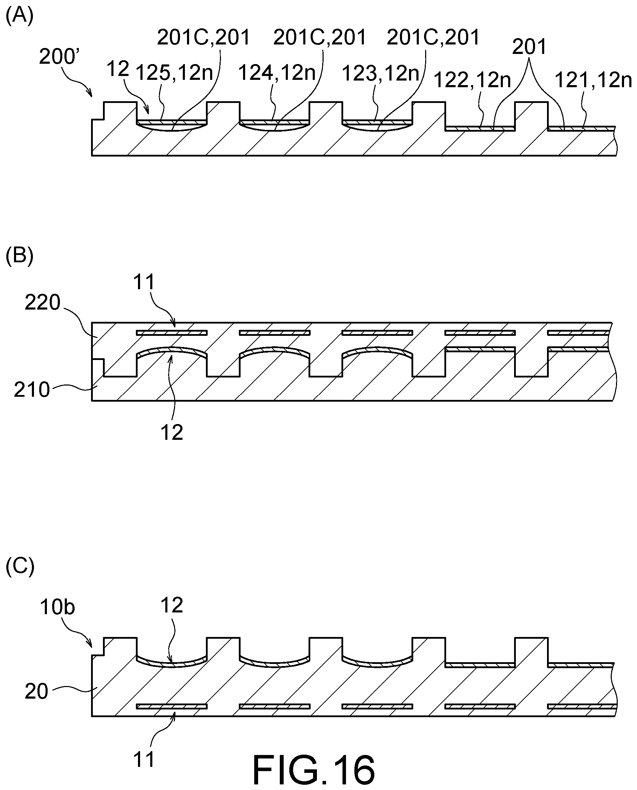

Figs. 16 illustrate an example of a method of manufacturing the coil component 10b illustrated in Fig. 15. Fig. 16(A) schematically illustrates a mold 200' that is used for manufacturing the coil component 10b. As for the mold 200', curved portions 201C are formed as portions of the installation surface 201 for the second planar coil 12. In this example, the curved portions 201C are formed as portions of the installation surface 201 at which the turn portions 123 to 125 of the second planar coil 12 are installed. A sectional shape of each curved portion 201C is an arc shape. Specifically, the curved portions 201C curve such that height gradually increases inward and outward in the radial direction of the second planar coil 12 from the same height position as that of flat portions of the installation surface 201 at which the curved portions 201C are not formed. The second planar coil 12 is installed on the mold 200' such that portions (the turn portions 123 to 125) thereof face the curved portions 201C. Subsequently, the same operation as the operation illustrated in Fig. 8 to Fig. 12 is performed. At this time, the turn portions 123 to 125 of the second planar coil 12 are pressed against the curved portions 201C and are consequently formed so as to curve. As illustrated in Fig. 16(B), a single body of the first mold material 210 that is cured, the second planar coil 12, the first planar coil 11, and the second mold material 220 that is cured is formed. The first mold material 210 is removed in this state, and consequently, the coil component 10b is obtained as illustrated in Fig. 16(C).

According to the present embodiment, the inner end portion of the first planar coil 11 in the radial direction and the inner end portion of the second planar coil 12 in the radial direction are electrically connected to each other. In this case, dielectric breakdown or a short circuit is likely to occur at the position of the outer circumference between the first planar coil 11 and the second planar coil 12 as described above. In the case where dielectric breakdown or a short circuit occurs, the electric current typically flows between an edge of the first planar coil 11 and an edge of the second planar coil 12. Accordingly, at least the some turn portions 12n that are located at or near the outer circumference among the multiple turn portions 12n curve according to the present embodiment. Consequently, dielectric breakdown or a short circuit, which can occur between the first planar coil 11 and the second planar coil 12, can be decreased. According to the present embodiment, the position in the thickness direction of each turn portion 12n of the second planar coil 12 is substantially constant, and accordingly, the size can be effectively inhibited from increasing due to the increase in the thickness of the third layer 23, and the coil performance can be effectively inhibited from declining.

In the case where the outer end portion of the first planar coil 11 in the radial direction and the outer end portion of the second planar coil 12 in the radial direction are electrically connected to each other, some turn portions 12n that are located at or near the inner circumference among the multiple turn portions 12n may curve.

### <<Fourth Embodiment>>

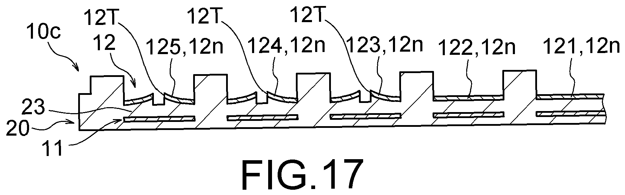

A coil component 10c according to a fourth embodiment will now be described. Fig. 17 is a sectional view of a portion of the coil component 10c according to the fourth embodiment. Components according to the embodiment described later like or corresponding to those according to the first to third embodiments are designated by using like reference signs. In the case of the like components, the detailed description thereof is omitted.

Also, according to the fourth embodiment, as illustrated in Fig. 17, at least one of the turn portions 12n among the multiple turn portions 12n of the second planar coil 12 curves so as to leave from the first planar coil 11. Specifically, at least some turn portions 12n that are located at or near the outer circumference among the multiple turn portions 12n curve, and turn portions 12b that are located inside the turn portions 12n that curve do not curve. More specifically, also according to the present embodiment, the number of turns of the second planar coil 12 is 5. The third or more turn portions 123 to 125 counted from the center of the second planar coil 12 curve so as to leave from the first planar coil 11.

According to the present embodiment, however, the turn portions 12n curve such that central portions in the radial direction leave from the first planar coil 11, and this point is a difference from the third embodiment. More specifically, the turn portions 12n that curve have through-holes 12T at the central portions in the radial direction. As for the turn portions 12n that curve, at least circumferential portions of the through-holes 12T curve so as to leave from the first planar coil 11. More specifically, as for each turn portion 12n that curves, the entire central portion in the radial direction curves so as to leave from the first planar coil 11.

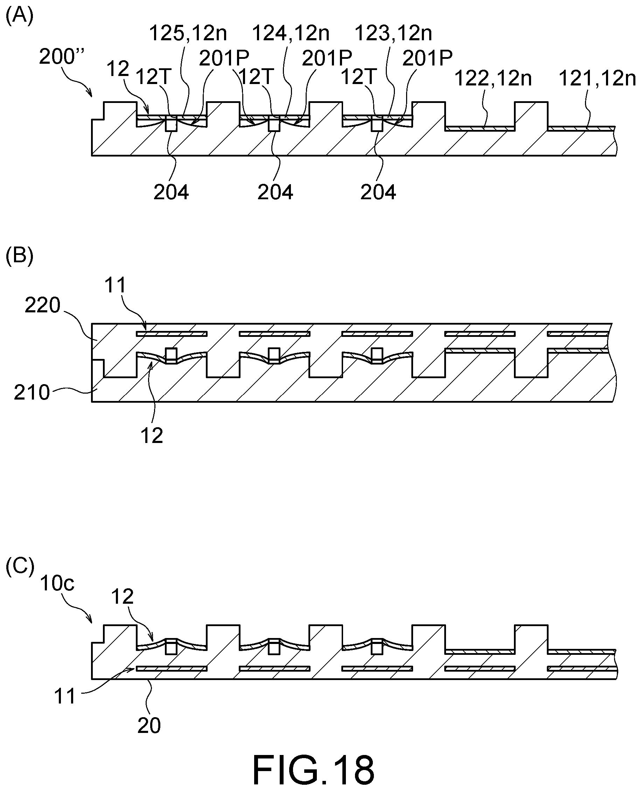

Figs. 18 illustrate an example of a method of manufacturing the coil component 10c illustrated in Fig. 17. Fig. 18(A) schematically illustrates a mold 200" that is used for manufacturing the coil component 10c. As for the mold 200", raised portions 201P are formed as portions of the installation surface 201 for the second planar coil 12. In this example, the raised portions 201P are formed as portions of the installation surface 201 at which the turn portions 123 to 125 of the second planar coil 12 are installed. A sectional shape of each raised portion 201P is a trapezoidal shape. Specifically, the raised portions 201P are raised from the same height position as that of flat portions of the installation surface 201 at which the curved portions 201C are not formed and are tapered such that height gradually increases inward and outward in the radial direction of the second planar coil 12. The raised portions 201P have bottomed holes 204 that are depressed downward from portions corresponding to upper bottoms toward lower bottoms. The second planar coil 12 is installed on the mold 200" such that portions (the turn portions 123 to 125) thereof face the raised portions 201P. The turn portions 123 to 125 are installed such that the through-holes 12T overlap the bottomed holes 204 of the raised portions 201P. Subsequently, the same operation as the operation illustrated in Fig. 8 to Fig. 12 is performed. At this time, the turn portions 123 to 125 of the second planar coil 12 are pressed against the raised portions 201P and are consequently formed so as to curve. As illustrated in Fig. 18(B), a single body of the first mold material 210 that is cured, the second planar coil 12, the first planar coil 11, and the second mold material 220 that is cured is formed. As illustrated in Fig. 18(B), rod portions that extend through the through-holes 12T of the second planar coil 12 are formed on the first mold material 210. The rod portions are formed in a manner in which the first mold material 210 is filled in the through-holes 12T and the bottomed holes 204. The first mold material 210 is removed in the state illustrated in Fig. 18(B), and consequently, the coil component 10c is obtained as illustrated in Fig. 18(C).

Also according to the present embodiment, the inner end portion of the first planar coil 11 in the radial direction and the inner end portion of the second planar coil 12 in the radial direction are electrically connected to each other. In this case, dielectric breakdown or a short circuit is likely to occur at the position of the outer circumference between the first planar coil 11 and the second planar coil 12 as described above. In the case where dielectric breakdown or a short circuit occurs, the electric current typically flows between the edge of the first planar coil 11 and the edge of the second planar coil 12. Accordingly, the some turn portions 12n that are located at or near the outer circumference among the multiple turn portions 12n curve according to the present embodiment. Consequently, dielectric breakdown or a short circuit, which can occur between the first planar coil 11 and the second planar coil 12, can be decreased. According to the present embodiment, the position in the thickness direction of each turn portion 12n of the second planar coil 12 is substantially constant, and accordingly, the size can be effectively inhibited from increasing due to the increase in the thickness of the third layer 23, and the coil performance can be effectively inhibited from declining.

In the case where the outer end portion of the first planar coil 11 in the radial direction and the outer end portion of the second planar coil 12 in the radial direction are electrically connected to each other, some turn portions 12n that are located at or near the inner circumference among the multiple turn portions 12n may curve.

### <<Fifth Embodiment>>

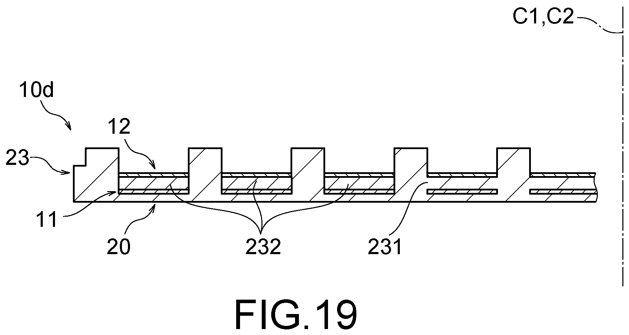

A coil component 10d according to a fifth embodiment will now be described. Fig. 19 is a sectional view of a portion of the coil component 10d according to the fifth embodiment. Components according to the embodiment described later like or corresponding to those according to the first to fourth embodiments are designated by using like reference signs. In the case of the like components, the detailed description thereof is omitted.

According to the fifth embodiment, as illustrated in Fig. 19, the third layer 23 of the spacer member 20 includes a magnetic-material-containing portion 231 that contains a magnetic material and non-magnetic portions 232 that do not contain a magnetic material. The non-magnetic portions 232 are provided between at least a single pair among multiple pairs of the turn portions 11n of the first planar coil 11 and the turn portions 12n of the second planar coil 12 that face each other. According to the present embodiment, the non-magnetic portions 232 are provided among multiple (three) pairs including at least a pair that is located at the outer circumference among the multiple pairs of the turn portions 11n of the first planar coil 11 and the turn portions 12n of the second planar coil 12 that face each other. Specifically, portions of the third layer 23 that are located between the third or more turn portions 113 to 115 counted from the center of the first planar coil 11 and the corresponding turn portions 123 to 125 of the second planar coil 12 that face the third or more turn portions 113 to 115 are partly or entirely (entirely in this example) formed by the non-magnetic portions 232.

The volume resistivity value of the magnetic-material-containing portion 231 is smaller than the volume resistivity value of each non-magnetic portion 232. The non-magnetic portions 232 may be composed of an insulating material such as nylon, polypropylene, or epoxy. However, the material of the non-magnetic portion 232 is not particularly limited provided that the material exerts no magnetism and has insulation properties.

Also according to the present embodiment, the inner end portion of the first planar coil 11 in the radial direction and the inner end portion of the second planar coil 12 in the radial direction are electrically connected to each other. In this case, the electric field strength (the electric potential difference) between the first planar coil 11 and the second planar coil 12 tends to increase as the distances in the radial direction from the inner end portions in the radial direction increase. In this case, dielectric breakdown or a short circuit is likely to occur at the position of the outer circumference between the first planar coil 11 and the second planar coil 12. According to the present embodiment, however, the non-magnetic portions 232 of the third layer 23 are provided among the multiple (three) pairs including at least the pair that is located at the outer circumference among the multiple pairs of the turn portions 11n of the first planar coil 11 and the turn portions 12n of the second planar coil 12 that face each other. More specifically, the portions of the third layer 23 that are located between the third or more turn portions 113 to 115 counted from the center of the first planar coil 11 and the corresponding turn portions 123 to 125 of the second planar coil 12 that face the third or more turn portions 113 to 115 are partly or entirely (entirely in this example) formed by the non-magnetic portions 232. The thickness of the entire region of the third layer 23 is constant.

According to the fifth embodiment described above, the non-magnetic portions 232 are partly provided in the third layer 23 as described above, and consequently, dielectric breakdown or a short circuit can be inhibited from occurring more than the case where the volume resistivity value of the layer between the first planar coil 11 and the second planar coil 12 is constant.

### <<Sixth Embodiment>>

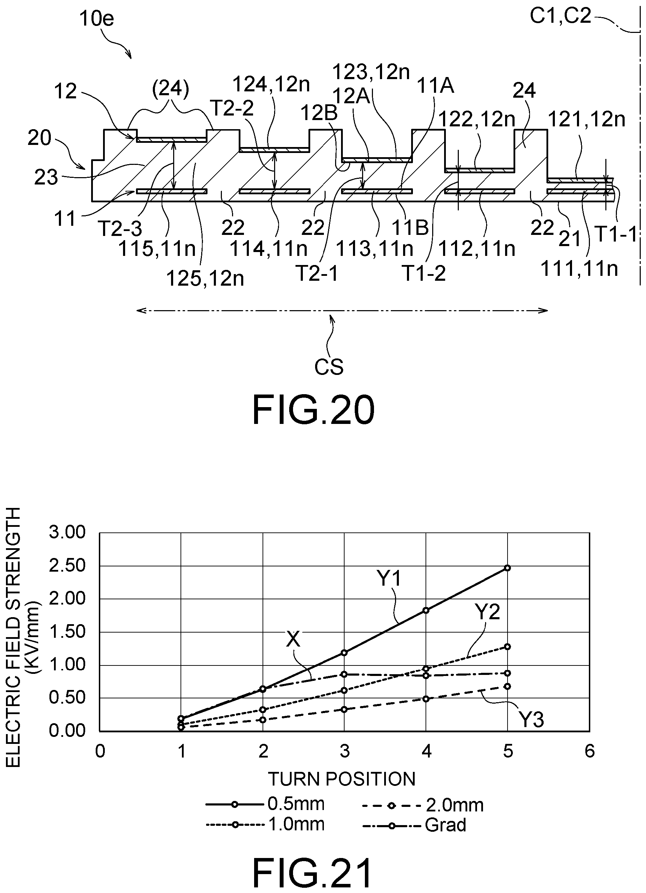

A coil component 10e according to a sixth embodiment will now be described. Fig. 20 is a sectional view of a portion of the coil component 10e according to the sixth embodiment. Components according to the embodiment described later like or corresponding to those according to the first to fifth embodiments are designated by using like reference signs. In the case of the like components, the detailed description thereof is omitted.

According to the sixth embodiment, the third layer 23 of the spacer member 20 is formed such that the thickness gradually increases in the direction from the centers of the first planar coil 11 and the second planar coil 12 toward the outer circumference.

Specifically, in an example in Fig. 20, the thicknesses of portions of the third layer 23 that are located between the second or more turn portions 11n of the first planar coil 11 counted from the center and the corresponding turn portions 12n of the second planar coil 12 that face the second or more turn portions 11n are entirely or partly more than the thicknesses of portions of the third layer 23 that are located between the turn portions 11n and the turn portions 12n that face each other inside these. This relationship is satisfied regarding the portions of the third layer 23 that are located between the second or more turn portions 11n of the first planar coil 11 and the corresponding turn portions 12n of the second planar coil 12 that face the second or more turn portions 11n. That is, T1-1, T1-2, and T2-1 to T2-3 in Fig. 20 represent the thickness of the third layer 23, and T1-1 <T1-2 <T2-1 <T2-2 <T2-3 is satisfied.

The shape of the third layer 23 of the spacer member 20 that is formed such that the thickness gradually increases in the direction from the centers of the first planar coil 11 and the second planar coil 12 toward the outer circumference may be a shape that is formed such that the thickness of the third layer 23 always increases over the entire region that extends from an inner end portion in the radial direction that is located between the turn portion 11n of the first planar coil 11 and the turn portion 12n of the second planar coil 12 that are located at the innermost circumference in the third layer 23 to an outer end portion in the radial direction that is located between the turn portion 11n of the first planar coil 11 and the turn portion 12n of the second planar coil 12 that are located at the outermost circumference in the third layer 23.

The shape of the third layer 23 of the spacer member 20 that is formed such that the thickness gradually increases from the centers of the first planar coil 11 and the second planar coil 12 toward the outer circumference may be a shape that is formed such that the thickness of a portion of the third layer 23 that is located between the second or more turn portions 11n of the first planar coil 11 counted from the center and the corresponding turn portions 12n of the second planar coil 12 that face the second or more turn portions 11n is more than the thickness of a portion of the third layer 23 that is located between the turn portions 11n and the turn portions 12n that face each other inside these at a certain point. In this aspect, the point at which the thickness changes is preferably located between a linear part of the turn portions 11n and a linear part of the turn portions 12n. According to the present embodiment, for example, each of the turn portions 11n and the turn portions 12n has a rectangular shape as illustrated in Fig. 5 and includes four linear portions and arc corner portions that connect end parts of the linear portions adjacent to each other. In this case, for example, the portion of the third layer 23 that has the changed thickness is preferably formed in a manner in which the turn portions 12n are curved so as to leave from the turn portions 11n at the linear portions of the turn portions 12n. For example, this case is advantageous in the perspective of ease of manufacture. Such a shape may be used for an aspect in which the thickness of the third layer 23 increases in a direction from the outer circumference toward the inner circumference.

Fig. 21 illustrates a graph for describing the electric field strength when predetermined dimensions are set to the coil component 10e, and a high-frequency current is applied to the coil component 10e in a certain condition and the electric field strength when a high-frequency current is applied to coil components in comparative examples in the same condition. Specifically, in the certain condition, an alternating electric current of 50 A is applied at 85 KHz. 1 to 5 illustrated at the horizontal axis represent positions of the pairs of the turn portions 11n of the first planar coil 11 and the turn portions 12n of the second planar coil 12 that face each other counted from the centers (C1 and C2). 1 means a position between the turn portion 111 and the turn portion 121. The vertical axis represents the value of the electric field strength. The electric field strength for the coil component 10e is illustrated by using a broken line X.

As for the coil components in the comparative examples, portions corresponding to the third layer 23 have a constant thickness. In a first comparative example, an interval between planar coils that overlap is 0.5 mm, and insulating resin that has a thickness of 0.5 mm is provided. In a second comparative example, an interval between planar coils that overlap is 1.0 mm, and insulating resin that has a thickness of 1.0 mm is provided. In a third comparative example, an interval between planar coils that overlap is 2.0 mm, and insulating resin that has a thickness of 2.0 mm is provided. The electric field strength in the first to third comparative examples is illustrated by using broken lines Y1 to Y3.

It has been confirmed that dielectric breakdown occurs between third or more turn portions counted from the center in the first comparative example in which the thickness of the resin is 0.5 mm. Specifically, the electric field strength between the third turn portions counted from the center is about 1300 kV/mm. It has been confirmed that dielectric breakdown occurs between fifth turn portions counted from the center in the second comparative example in which the thickness of the resin is 1.0 mm. In the third comparative example, no dielectric breakdown is seen.

In consideration of the results of the comparative examples described above, as for the coil component 10e, the thickness of the third layer 23 is adjusted such that the electric field strength is 1 kV/mm or less over the entire region between the turn portions 11n of the first planar coil 11 and the turn portions 12n of the second planar coil 12 that face each other, and consequently, the occurrence of dielectric breakdown is avoided.

Specifically, as for the coil component 10e, the third layer 23 is formed such that the thickness always increases in a direction from the inner circumference toward the outer circumference, and the thickness of the inner end portion of the third layer 23 in the radial direction that is located between the turn portion 11n of the first planar coil 11 and the turn portion 12n of the second planar coil 12 that are located at the innermost circumference is set at about 0.5 mm. The thickness of the outer end portion of the third layer 23 in the radial direction that is located between the turn portion 11n of the first planar coil 11 and the turn portion 12n of the second planar coil 12 that are located at the outermost circumference is set at about 1.6 mm. Consequently, the electric field strength is entirely decreased to 1 kV/mm or less as illustrated by using a reference sign X in Fig. 21. The occurrence of dielectric breakdown is not seen. As for the coil component 10e, the thickness of a portion of the third layer 23 between the third turn portion 113 counted from the center and the turn portion 123 is about 0.8 mm, and the thickness of a portion of the third layer 23 between the fourth turn portion 114 counted from the center and the turn portion 124 is about 1.2 mm.

It can be confirmed from the results described above that the coil component 10e enables the entire thickness to be decreased and enables the performance of the coil component 10e to be improved.

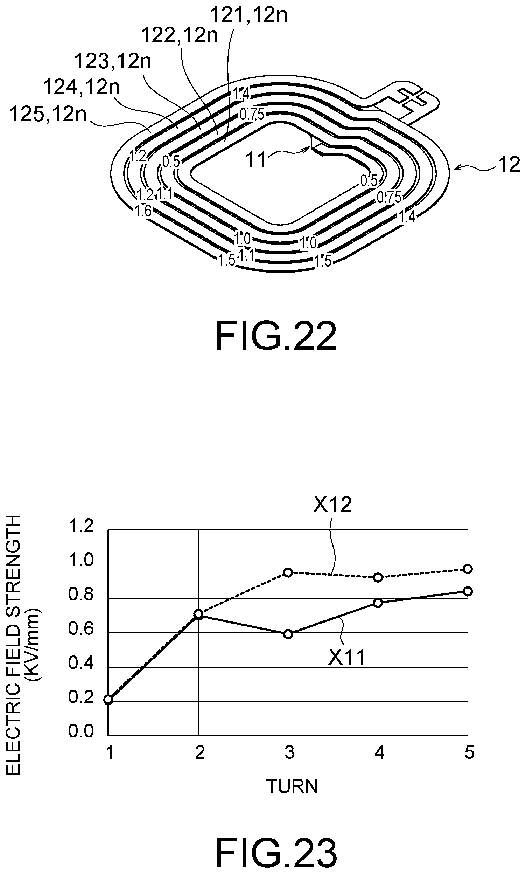

Fig. 22 is a perspective view of the coil component 10e where predetermined dimensions that are set to the coil component 10e and that differ from those in Fig. 21 are illustrated. That is, Fig. 22 illustrates numerals such as "0.5", "0.75", "1.0", ··· "1.6" on the second planar coil 12, and these numerals represent the distance (mm) of the interval between the first planar coil 11 and the second planar coil 12 at illustrated positions, in other words, the thickness (mm) of the third layer 23.

In an example illustrated in Fig. 22, the thickness of the inner end portion of the third layer 23 in the radial direction that is located between the turn portion 11n of the first planar coil 11 and the turn portion 12n of the second planar coil 12 that are located at the innermost circumference is set at 0.5 mm. The multiple turn portions 12n of the second planar coil 12 curve so as to leave from the turn portions 11n of the first planar coil 11 at the linear portions. Consequently, the distance between the first planar coil 11 and the second planar coil 12 and the thickness of the third layer 23 increase in the direction from the inner circumference toward the outer circumference.

Fig. 23 illustrates a graph for describing the electric field strength of the coil component 10e in a dimensional condition illustrated in Fig. 22. The condition of application of the electric current and the meanings of the horizontal axis and vertical axis of the graph are the same as those in Fig. 21. A reference sign X11 represents the electric field strength of the coil component 10e in the dimensional condition illustrated in Fig. 22. Also, as for the coil component 10e illustrated in Fig. 22, as illustrated by the reference sign X11, the electric field strength is 1 kV/mm or less over the entire region between the turn portions 11n of the first planar coil 11 and the turn portions 12n of the second planar coil 12 that face each other. In Fig. 23, X12 represents the result of the electric field strength in the case where the coil component 10e that includes the third layer 23 that is formed such that the thickness always increases in the direction from the inner circumference toward the outer circumference. The electric field strength in an aspect illustrated by using X11 is decreased more than an aspect illustrated by using X12. It can be said from this result that the electric field strength is unlikely to be sharply decreased in the case where the third layer 23 is formed such that the thickness always increases in the direction from the inner circumference toward the outer circumference. In this perspective, the shape that enables the thickness of the third layer 23 to increase at a freely determined point is advantageous, for example, in the case where the electric field strength is adjusted to the desired value.

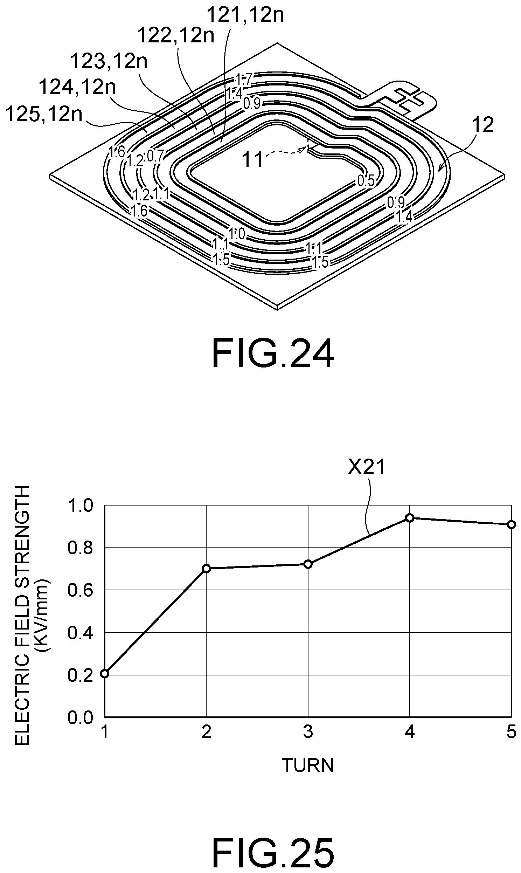

Also, Fig. 24 is a perspective view of the coil component 10e where predetermined dimensions that are set to the coil component 10e and that differ from those in Fig. 21 and Fig. 22 are illustrated. That is, Fig. 24 illustrates numerals such as "0.5", "0.7", "0.9", ··· "1.7" on the second planar coil 12, and these numerals represent the distance (mm) of the interval between the first planar coil 11 and the second planar coil 12 at illustrated positions, in other words, the thickness (mm) of the third layer 23.

In an example illustrated in Fig. 24, the thicknesses of portions of the third layer 23 that are located between the first and second turn portions 11n of the first planar coil 11 counted from the center and the turn portions 12n of the second planar coil 12 that face these are set at 0.5 mm. The thicknesses of portions of the third layer 23 that are located between the third or more turn portions 11n of the first planar coil 11 counted from the center and the turn portions 12n of the second planar coil 12 that face these gradually increase in the direction toward the outer circumference. Consequently, the distance between the first planar coil 11 and the second planar coil 12 and the thickness of the third layer 23 increase in the direction from the inner circumference toward the outer circumference.

Fig. 25 illustrates a graph for describing the electric field strength of the coil component 10e in a dimensional condition illustrated in Fig. 24. The condition of application of the electric current and the meanings of the horizontal axis and vertical axis of the graph are the same as those in Fig. 21. A reference sign X21 represents the electric field strength of the coil component 10e in the dimensional condition illustrated in Fig. 24. Also, as for the coil component 10e illustrated in Fig. 24, as illustrated by the reference sign X21, the electric field strength is 1 kV/mm or less over the entire region between the turn portions 11n of the first planar coil 11 and the turn portions 12n of the second planar coil 12 that face each other.

The embodiments of the present disclosure are described above, but the embodiments described above may be modified in various ways. Such modifications can be included in the technical range of the present disclosure.

### Reference Signs List

S ··· power transmission system
1 ··· power transmitter
1A ··· high-frequency current applying unit
2 ··· power receiver
2A ··· converter
10, 10a, 10b, 10c, 10d, 10e ··· coil component
10M ··· coil intermediate material
11 ··· first planar coil
11A ··· first surface
11B ··· second surface
11n ··· turn portion
11nX ··· main portion
11nY ··· transition portion
11E ··· conductor
11h ··· path hole
12 ··· second planar coil
12A ··· first surface
12B ··· second surface
12n ··· turn portion
12nX ··· main portion
12nY ··· transition portion
12E ··· conductor
12T ··· through-hole
20 ··· spacer member
21 ··· first layer
22 ··· second layer
23 ··· third layer
23A ··· first portion
23B ··· second portion
231 ··· magnetic-material-containing portion
232 ··· non-magnetic portion
24 ··· fourth layer
61 ··· first connection terminal
62 ··· second connection terminal
200, 200', 200" ··· mold
201 ··· installation surface
201L ··· lower portion
201H ··· higher portion
201C ··· curved portion
201P ··· raised portion
202 ··· protuberance
204 ··· bottomed hole
210 ··· first mold material
220 ··· second mold material
C1 ··· first central axis
C2 ··· second central axis

## Claims

1. A coil component comprising:
a first planar coil;
a second planar coil that is stacked with the first planar coil at an interval; and
a spacer member that includes a layer that fills the interval,
wherein a volume resistivity value of the layer with respect to an electric current that flows in a direction in which the first planar coil and the second planar coil overlap changes depending on a position of the layer on a rectangular coordinate system that is determined on a plane perpendicular to the direction in which the first planar coil and the second planar coil overlap.

2. The coil component according to claim 1, wherein a thickness of the layer is non-uniform, and
a distance between the first planar coil and the second planar coil is non-uniform.

3. A coil component comprising:
a first planar coil;
a second planar coil that is stacked with the first planar coil at an interval; and
a spacer member that includes a layer that fills the interval,
wherein a thickness of the layer is non-uniform, and
wherein a distance between the first planar coil and the second planar coil is non-uniform.

4. The coil component according to claim 2 or claim 3, wherein the first planar coil includes three or more turn portions that are arranged in a radial direction,
wherein the second planar coil includes three or more turn portions that are arranged in a radial direction,
wherein an n-th (n is an integer that ranges from 1 to a number of turns of the first planar coil that is 3 or more) turn portion counted from a center of the first planar coil partly faces an n-th (n is an integer that ranges from 1 to a number of turns of the second planar coil that is 3 or more) turn portion counted from a center of the second planar coil, and
wherein a thickness of a portion of the layer that is located between a third or more turn portion counted from the center of the first planar coil and a corresponding turn portion of the second planar coil that faces the third or more turn portion is partly or entirely more than a thickness of a portion that is located between a second or less turn portion counted from the center of the first planar coil and a corresponding turn portion of the second planar coil that faces the second or less turn portion.

5. The coil component according to claim 2 or claim 3, wherein the second planar coil curves such that a distance from an outer circumferential edge of the second planar coil to the first planar coil in the direction in which the first planar coil and the second planar coil overlap is longer than a distance from an inner circumferential edge of the second planar coil to the first planar coil in the direction in which the first planar coil and the second planar coil overlap.

6. The coil component according to claim 4, wherein an inner end portion of the first planar coil in the radial direction and an inner end portion of the second planar coil in the radial direction are electrically connected to each other.

7. The coil component according to claim 2 or claim 3, wherein the first planar coil includes three or more turn portions that are arranged in a radial direction,
wherein the second planar coil includes three or more turn portions that are arranged in a radial direction,
wherein an n-th (n is an integer that ranges from 1 to a number of turns of the first planar coil that is 3 or more) turn portion counted from a center of the first planar coil partly faces an n-th (n is an integer that ranges from 1 to a number of turns of the second planar coil that is 3 or more) turn portion counted from a center of the second planar coil, and
wherein a thickness of a portion of the layer that is located between a third or more turn portion counted from an outermost turn portion of the first planar coil and a corresponding turn portion of the second planar coil that faces the third or more turn portion is partly or entirely more than a thickness of a portion that is located between a second or less turn portion counted from the outermost turn portion of the first planar coil and a corresponding turn portion of the second planar coil that faces the second or less turn portion.

8. The coil component according to claim 2 or claim 3, wherein the second planar coil curves such that a distance from an inner circumferential edge of the second planar coil to the first planar coil in the direction in which the first planar coil and the second planar coil overlap is longer than a distance from an outer circumferential edge of the second planar coil to the first planar coil in the direction in which the first planar coil and the second planar coil overlap.

9. The coil component according to claim 7, wherein an outer end portion of the first planar coil in the radial direction and an outer end portion of the second planar coil in the radial direction are electrically connected to each other.

10. The coil component according to any one of claim 1 to claim 3, wherein the second planar coil includes multiple turn portions that are arranged in a radial direction, and
wherein at least one turn portion among the multiple turn portions curves so as to leave from the first planar coil.

11. The coil component according to claim 10, wherein the at least one turn portion has a through-hole, and at least a circumferential portion of the through-hole of the at least one turn portion curves so as to leave from the first planar coil.

12. The coil component according to any one of claim 1 to claim 3, wherein the spacer member entirely exerts magnetism.

13. The coil component according to claim 12, wherein the spacer member contains a holding material that contains resin and a magnetic material particle that is held by the holding material.

14. The coil component according to claim 1, wherein the layer includes a magnetic-material-containing portion that contains a magnetic material and a non-magnetic portion that does not contain a magnetic material, and
wherein the volume resistivity value of the magnetic-material-containing portion is smaller than the volume resistivity value of the non-magnetic portion.

15. The coil component according to claim 14, wherein the non-magnetic portion is composed of nylon, polypropylene, or epoxy.

16. The coil component according to claim 14 or claim 15, wherein the first planar coil includes three or more turn portions that are arranged in a radial direction,
wherein the second planar coil includes three or more turn portions that are arranged in a radial direction,
wherein an n-th (n is an integer that ranges from 1 to a number of turns of the first planar coil that is 3 or more) turn portion counted from a center of the first planar coil partly faces an n-th (n is an integer that ranges from 1 to a number of turns of the second planar coil that is 3 or more) turn portion counted from a center of the second planar coil, and
wherein a portion of the layer that is located between a third or more turn portion counted from the center of the first planar coil and a corresponding turn portion of the second planar coil that faces the third or more turn portion is partly or entirely formed by the non-magnetic portion.

17. The coil component according to claim 2 or claim 3, wherein the distance in the direction in which the first planar coil and the second planar coil overlap gradually increases in a direction from an inner circumference toward an outer circumference.

18. A method of manufacturing a coil component, the method comprising:
a step of preparing a mold that has an installation surface that includes portions that have different heights;
a step of installing a second planar coil on the mold such that a portion of the second planar coil faces the portions of the installation surface that have the different heights;
a step of pressing a first mold material against the installation surface with the second planar coil interposed therebetween and forming the first mold material that is cured and the second planar coil into a single body;
a step of removing the first mold material and the second planar coil from the mold;
a step of disposing the first planar coil at an interval from a surface of the second planar coil opposite a surface that is joined to the first mold material such that the first planar coil overlaps the opposite surface; and
a step of filling a second mold material between the first planar coil and the second planar coil.

19. A power transmitter comprising: the coil component according to claim 1.

20. A power receiver comprising: the coil component according to claim 1.

21. A power transmission system comprising:
a power transmitter; and a power receiver,
wherein at least the power transmitter or the power receiver includes the coil component according to claim 1.
